# EUROPEAN PATENT SPECIFICATION

(11) **EP 3 503 068 B1**
(45) Date of publication and mention of the grant of the patent: **29.03.2023**
(21) Application number: 17843429.6
(22) Date of filing: 10.08.2017
(51) Int. Cl.: G05D 1/00, G08G 1/09, G05D 1/02

(54) **VEHICLE AND CONTROL METHOD**
FAHRZEUG UND STEUERUNGSVERFAHREN
VÉHICULE ET SON PROCÉDÉ DE COMMANDE

(30) Priority: 22.08.2016 JP 2016161748
(43) Date of publication of application: 26.06.2019
(73) Proprietor: SONY MOBILE COMMUNICATIONS INC., Shinagawa-ku Tokyo 140-0002 (JP); Sony Group Corporation, Tokyo 108-0075 (JP)
(72) Inventor: TAKANASHI, Shin, Tokyo 140-0002 (JP); ERIGUCHI, Masao, Tokyo 140-0002 (JP); UEDA, Arinobu, Tokyo 108-0075 (JP)
(74) Representative: Witte, Weller & Partner Patentanwälte mbB
(86) International application number: PCT/JP2017/029182
(87) International publication number: WO 2018/037945

(56) References cited:
- EP-A1- 2 762 988
- WO-A1-2015/070977
- DE-A1- 19 648 943
- DE-A1-102013 201 169
- DE-A1-102015 118 489
- DE-U1-202013 100 347
- JP-A- 2006 301 963
- JP-A- 2006 301 963
- JP-A- 2011 255 757
- JP-A- 2011 255 757
- JP-A- 2016 095 851
- US-A1- 2011 071 718
- US-A1- 2015 088 357

## Description

### Technical Field

The present technology relates to a vehicle and a control method.

### Background Art

A technology related to a remote operation of a moving body has been developed. As a technology related to a remote operation of a moving device using an image captured by an imaging device provided in the moving device, for example, a technology described in the following Patent Literature 1 is able to be exemplified.

JP 2006 301963 A discloses a remote control system.

DE 10 2015 118489 A1 discloses remote operation of an autonomous vehicle in an unexpected environment.

JP 2011 255757 A discloses a remote-and-manual operation combined vehicle.

DE 10 2013 201169 A1 discloses a remote control system for a motor vehicle with a personal data terminal for remote monitoring and/or remote control.

EP 2 762 988 A1 discloses a demand-activated remote control and a monitoring system for motor vehicles.

DE 20 2013 100347 U1 discloses a system for demand-activated remote monitoring and control of motor vehicles via a radio data communication link with a coordination unit.

US 2015/088357 A1 discloses a transitioning from autonomous vehicle control to driver control. Data is obtained concerning at least one attribute of a vehicle operator. The attribute is used to determine an instruction for positioning a vehicle component during autonomous operation of the vehicle. Autonomous operation of the vehicle, including positioning the vehicle component according to the instruction, is performed.

WO 2015/070977 A1 discloses a method for operating a driver assistance system of a motor vehicle. In an autonomous driving mode, the driver assistance system independently performs vehicle guidance comprising both longitudinal guidance and lateral guidance of the motor vehicle and at the same time receives a change signal that is designed to initiate a change from the autonomous driving mode to a predetermined other driving mode in which it is intended that a driver of the motor vehicle performs at least part of the vehicle guidance.

DE 196 48 943 A1 discloses an automatic drive mode control unit which receives information from a traffic sensor and a vehicle speed sensor among others and activates, if required, an automatic drive element, controlling the speed of the vehicle and the steering. There is a mode switch-over unit for switching between the automatic mode and the manual mode mounted near the driver's seat, and its signal goes to the control unit which receives also a signal from the GPS (global positioning system) giving the position of the motor vehicle. The control unit determines the time needed to activate the switch-over unit from automatic to manual, displayed on the indicator with a warning if this is not possible.

### Citation List

### Patent Literature

Patent Literature 1: JP 2015-157323A

### Disclosure of Invention

### Technical Problem

It is expected that a vehicle capable of being driven by a driver and remotely driven by a person who performs remote driving (hereinafter, referred to as "external driver") will appear in the future.

The present disclosure proposes a new and improved vehicle and control method capable of realizing smoother switching between driving by a driver and remote driving.

### Solution to Problem

This problem is solved by the vehicle and the control method according to the independent claims.

According to the present disclosure, there is provided a vehicle that is able to be driven by a driver, the vehicle including: a control unit configured to perform control related to switching between driving by the driver and remote driving from an outside of the vehicle.

In addition, according to the present disclosure, there is provided a control method that is executed by a vehicle which is able to be driven by a driver, the control method including: a step of performing control related to switching between driving by the driver and remote driving from an outside of the vehicle.

### Advantageous Effects of Invention

According to the present disclosure, it is possible to realize smoother switching between driving by a driver and remote driving.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an explanatory diagram illustrating an example of a configuration of a control system according to the present embodiment.
[FIG. 2A] FIG. 2A is an explanatory diagram illustrating an example of a vehicle according to the present embodiment.
[FIG. 2B] FIG. 2B is an explanatory diagram illustrating another example of the vehicle according to the present embodiment.
[FIG. 3] FIG. 3 is a block diagram illustrating an example of a configuration of the vehicle 100 according to the present embodiment.
[FIG. 4] FIG. 4 is an explanatory diagram illustrating an example of a hardware configuration of the vehicle according to the present embodiment.
[FIG. 5A] FIG. 5A is an explanatory diagram illustrating an example of an operation device according to the present embodiment.
[FIG. 5B] FIG. 5B is an explanatory diagram illustrating another example of the operation device according to the present embodiment.
[FIG. 6] FIG. 6 is a block diagram illustrating an example of a configuration of an information processing device according to the present embodiment.
[FIG. 7] FIG. 7 is an explanatory diagram illustrating an example of a hardware configuration of the information processing device according to the present embodiment.
[FIG. 8] FIG. 8 is an explanatory diagram for explaining an example of a process related to a control method according to the present embodiment.
[FIG. 9] FIG. 9 is an explanatory diagram illustrating an example of a remote driving request message according to the present embodiment.
[FIG. 10] FIG. 10 is an explanatory diagram for explaining an example of a request for the remote driving in the control system according to the present embodiment.
[FIG. 11] FIG. 11 is an explanatory diagram for explaining an example of a request for the remote driving in the control system according to the present embodiment.
[FIG. 12] FIG. 12 is an explanatory diagram for explaining an example of a request for the remote driving in the control system according to the present embodiment.
[FIG. 13] FIG. 13 is an explanatory diagram for explaining an example of a request for the remote driving in the control system according to the present embodiment.
[FIG. 14] FIG. 14 is an explanatory diagram for explaining an example of a process related to the control method according to the present embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

In addition, hereinafter, a description will be given in the following sequence.
1. Control system according to the present embodiment
2. Control method according to the present embodiment
3. Use case of control system according to the present embodiment
4. Application examples of each device configuring control system according to the present embodiment
5. Program according to the present embodiment

### (Control system according to the present embodiment)

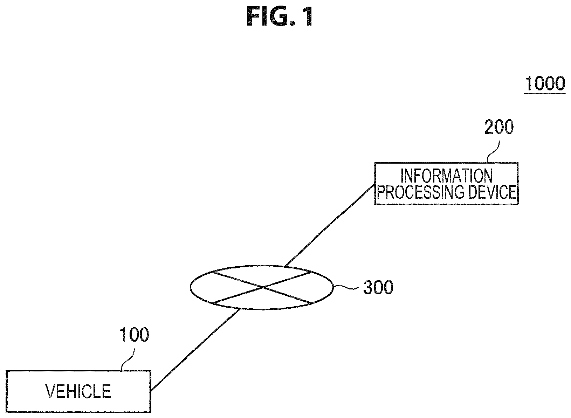

FIG. 1 is an explanatory diagram illustrating an example of a configuration of a control system 1000 according to the present embodiment. The control system 1000 includes a vehicle 100 and an information processing device 200.

For example, the vehicle 100 and the information processing device 200 are connected wirelessly or in a wired manner through a network 300. Examples of the network 300 may include a wired network such as a local area network (LAN) or a wide area network (WAN), a wireless network such as a wireless LAN (WLAN: wireless local area network), and the Internet using a communication protocol such as transmission control protocol/internet protocol (TCP/IP). Note that, in the control system according to the present embodiment, the vehicle 100 and the information processing device 200 are able to directly communicate with each other without through the network 300.

### [1] Vehicle 100

The vehicle 100 is a moving body in which driving by a driver and remote driving by an external driver are able to be performed. In a case in which the remote driving is performed by the external driver, a person may or may not be in the vehicle 100.

The vehicle 100 performs control related to switching between the driving by the driver and the remote driving from the outside of the vehicle by performing a process related to a control method according to the present embodiment, which will be described later.

An example of the vehicle 100 includes an electric vehicle that is driven by a motor, such as an electric cart. Note that, the vehicle 100 according to the present embodiment is not limited to an electric vehicle. Another application example of the vehicle 100 according to the present embodiment will be described later.

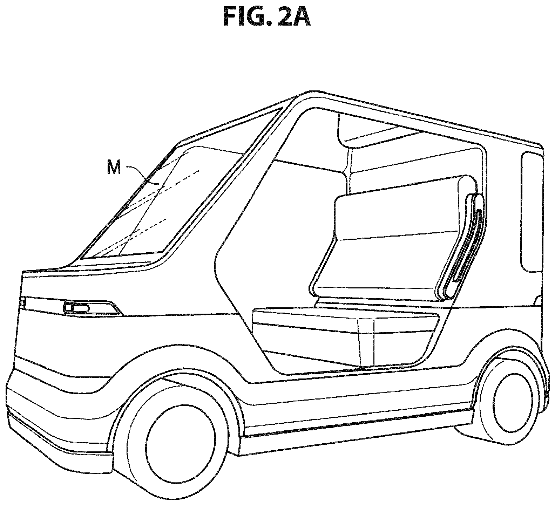

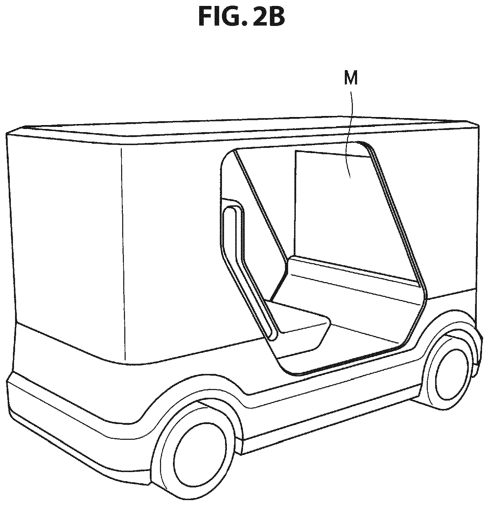

FIG. 2A is an explanatory diagram illustrating an example of the vehicle 100 according to the present embodiment, and FIG. 2B is an explanatory diagram illustrating another example of the vehicle 100 according to the present embodiment.

The vehicle 100 includes various sensors such as an imaging device (image sensor) and a position sensor such as a global navigation satellite system (GNSS) device. The vehicle 100 includes, for example, one or more imaging devices capable of imaging the surroundings of the vehicle 100 such as a front surface, a side surface, and a rear surface of the vehicle 100. In addition, the imaging device included in the vehicle 100 may be a stereo camera. In addition, for example, the position sensor included in the vehicle 100 may be an arbitrary type of sensor capable of estimating a position, such as a sensor that estimates a position by using wireless communication with a base station or a sensor that estimates a position by using simultaneous localization and mapping (SLAM) technology.

In addition, the vehicle 100 is provided with a display screen M capable of displaying various characters or images. The display screen M shown in FIG. 2A is a display screen of a transmission type display device, and the display screen M shown in FIG. 2B is a display screen of a non-transmission type display device. The driver of the vehicle 100 shown in FIG. 2A is able to directly view a real object that is present in front of the display screen M as viewed from the driver together with an image or the like displayed on the display screen M. On the other hand, a captured image captured by the imaging device is displayed on the display screen M shown in FIG. 2B, and the driver of the vehicle 100 shown in FIG. 2B recognizes the real object that is present in the surroundings of the vehicle 100 by the displayed captured image.

Here, an example of the image displayed on the display screen M may include the captured image captured by the imaging device included in the vehicle 100. In addition, an image based on one or more captured images may be displayed on the display screen M rather than the captured image itself captured by the imaging device included in the vehicle 100. An example of the image based on the captured image according to the present embodiment may include an image of an arbitrary viewpoint with respect to the vehicle 100, such as an image in which the vehicle 100 and a periphery of the vehicle 100 are represented in a bird's eye view. Display control of the image on the display screen M is performed by, for example, a control unit 110 included in the vehicle 100 that will be described later.

Note that, it goes without saying that an appearance and the like of the vehicle 100 according to the present embodiment are not limited to the examples shown in FIGS. 2A and 2B. Hereinafter, an example in which the vehicle 100 according to the present embodiment is the vehicle shown in FIG. 2B will be described.

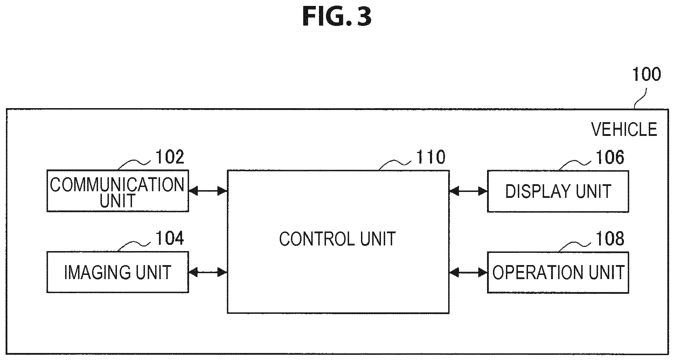

FIG. 3 is a block diagram illustrating an example of a configuration of the vehicle 100 according to the present embodiment. The vehicle 100 includes, for example, a communication unit 102, an imaging unit 104, a display unit 106, an operation unit 108, and the control unit 110.

In addition, the vehicle 100 includes a driving unit (not shown) for moving the vehicle. An example of the driving unit (not shown) may include a driving device that will be described later.

In addition, the vehicle 100 may include, for example, a read only memory (ROM, not shown), a random access memory (RAM, not shown), a storage unit (not shown), and the like. For example, the vehicle 100 connects between each of the configuration elements described above by a bus as a transmission path of data.

The ROM (not shown) stores control data such as a program or an arithmetic parameter used by the control unit 110. The RAM (not shown) temporarily stores a program executed by the control unit 110, and the like.

The storage unit (not shown) is a storage means included in the vehicle 100 and, for example, the storage unit stores various data such as data related to a control method according to the present embodiment, which will be described later, or various applications. Here, an example of the storage unit (not shown) may include a magnetic recording medium such as a hard disk or a nonvolatile memory such as a flash memory. In addition, the storage unit (not shown) may be detachable from the vehicle 100.

### [Hardware configuration example of vehicle 100]

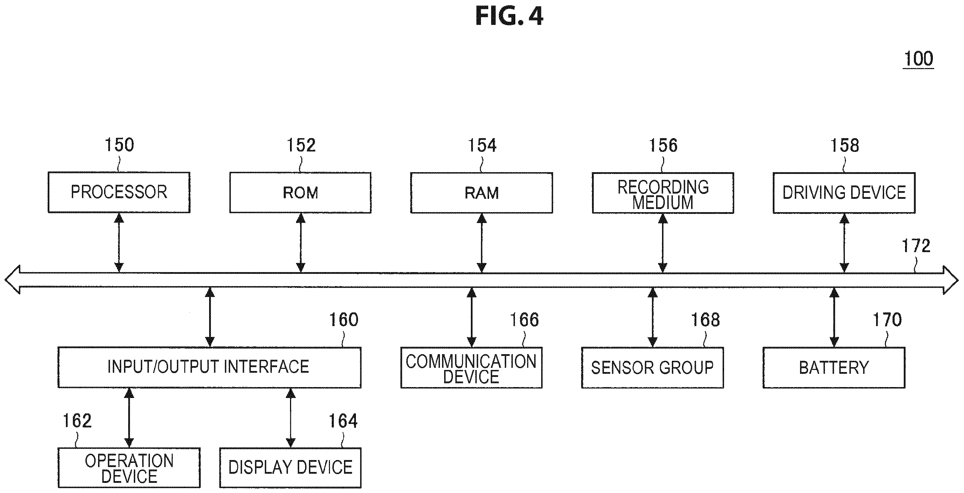

FIG. 4 is an explanatory diagram illustrating an example of a hardware configuration of the vehicle 100 according to the present embodiment. The vehicle 100 includes, for example, a processor 150, a ROM 152, a RAM 154, a recording medium 156, a driving device 158, an input/output interface 160, an operation device 162, a display device 164, a communication device 166, a sensor group 168, and a battery 170. In addition, for example, the vehicle 100 connects between each of configuration elements by a bus 172 as a transmission path of data or the like. The vehicle 100 is driven by, for example, electric power supplied from an internal power source such as the battery 170, electric power supplied from a connected external power source, or the like.

For example, the processor 150 includes one or more processors, various processing circuits, or the like that include an arithmetic circuit such as a micro processing unit (MPU), and controls the entire vehicle 100. In addition, the processor 150 functions as the control unit 110 that performs the process related to the control method according to the present embodiment that will be described later. Note that the process related to the control method according to the present embodiment, which will be described later, may be performed by a dedicated (or general purpose) circuit (for example, a processor or the like separate from the processor 150) capable of realizing the process related to the control method according to the present embodiment.

The ROM 152 stores a program used by the processor 150, control data such as an arithmetic parameter, or the like. The RAM 154 temporarily stores, for example, a program or the like to be executed by the processor 150.

The recording medium 156 functions as a storage unit (not shown), and stores, for example, various data such as data related to the control method according to the present embodiment, which will be described later, various applications, or the like. Here, an example of the recording medium 156 may include a magnetic recording medium such as a hard disk or a nonvolatile memory such as a flash memory. In addition, the recording medium 156 may be detachable from the vehicle 100.

Examples of the driving device 158 include various devices (or mechanisms) related to movement of the vehicle, such as a driving power source such as a motor, a wheel, a transmission device for transmitting driving power generated by the driving power source to wheels, a brake mechanism, and the like. Note that the driving device 158 may have various configurations according to application examples of the vehicle 100, which will described later.

The input/output interface 160 connects, for example, the operation device 162 or the display device 164. The operation device 162 functions as the operation unit 108. In addition, the display device 164 functions as the display unit 106. Here, an example of the input/output interface 160 may include a universal serial bus (USB) terminal, a digital visual interface (DVI) terminal, a high-definition multimedia interface (HDMI) (registered trademark) terminal, various processing circuits, or the like.

The operation device 162 is connected to the input/output interface 160, for example, in a wired manner. Note that the operation device 162 may be connected to the input/output interface 160 by wireless communication of an arbitrary communication method. In a case in which the operation device 162 is connected to the input/output interface 160 by the wireless communication, the operation device 162 is able to be regarded as an operation device outside the vehicle 100.

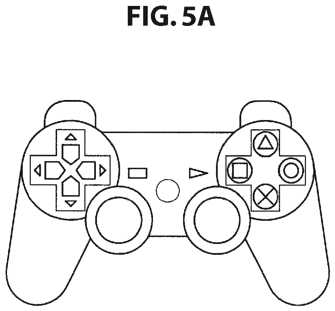

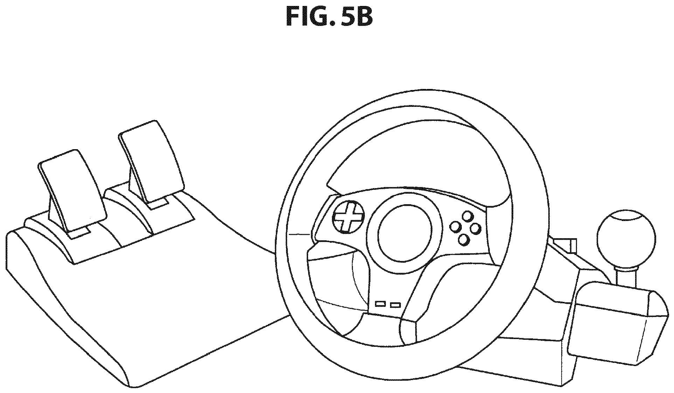

FIG. 5A is an explanatory diagram illustrating an example of the operation device 162 according to the present embodiment, and FIG. 5B is an explanatory diagram illustrating another example of the operation device 162 according to the present embodiment. Each of FIGS. 5A and 5B shows an example of an operation device for performing the driving operation of the vehicle 100.

For example, the driver of the vehicle 100 performs the driving operation of the vehicle 100 by operating a "game controller including a direction key, a button, a stick shape device and the like" as shown in FIG. 5A, or a "controller including a handle, a shift lever, an accelerator, and a brake pedal as shown in FIG. 5B.

Note that, it goes without saying that the example of the operation device for performing the driving operation of the vehicle 100 is not limited to the examples shown in FIGS. 5A and 5B.

Referring to FIG. 4 again, the example of the hardware configuration of the vehicle 100 will be described. For example, the display device 164 is provided on the vehicle 100 and is connected to the input/output interface 160 inside the vehicle 100. An example of the display device 164 includes a liquid crystal display, an organic EL display, or the like.

An example of a position where the display device 164 is provided includes a windshield portion of the vehicle 100 as shown on the display screen M in FIG. 2A, a wall portion in a direction in which the vehicle 100 moves forward as shown on the display screen M in FIG. 2B, and the like.

Note that the position where the display device 164 is provided is not limited to the examples shown in FIGS. 2A and 2B.

For example, in a case in which the display device 164 is the non-transmission type display device, as described above, the captured image captured by the imaging device (the imaging device including the sensor group 168 described above) is displayed on the display screen of the display device 164. Therefore, in a case in which the display device 164 is the non-transmission type display device, the driver of the vehicle 100 is able to recognize the real object that is present around the vehicle 100 by the displayed captured image. Therefore, in a case in which the display device 164 is the non-transmission type display device, the display device 164 may be provided at an arbitrary position at which the driver is able to perform the driving by watching the display screen.

Note that, it goes without saying that the input/output interface 160 is able to be connected to an external device such as an operation device (for example, a keyboard, a mouse, or the like) outside the vehicle 100 or an external display device. In addition, for example, the display device 164 may be a device capable of allowing display and a user operation, such as a touch panel.

The communication device 166 is a communication means included in the vehicle 100, and functions as the communication unit 102 for performing wireless or wired communication with, for example, an external device such as the information processing device 200 through the network 300 (or directly).

Here, an example of the communication device 166 includes a communication antenna and a radio frequency (RF) circuit (wireless communication), an IEEE 802.15.1 port and a transmission/reception circuit (wireless communication), an IEEE 802.11 port and a transmission/reception circuit (wireless communication), a local area network (LAN) terminal and a transmission/reception circuit (wired communication), or the like. In addition, the communication device 166 may have any configuration corresponding to the network 300.

The sensor group 168 includes, for example, one or more imaging devices (image sensors). The imaging device includes, for example, a lens/imaging element and a signal processing circuit. The lens/imaging element includes, for example, a lens of an optical system and an image sensor having a plurality of imaging elements. An example of the imaging element (not shown) includes a complementary metal oxide semiconductor (CMOS), a charge coupled device (CCD), and a stack type imaging element formed by stacking another configuration element such as a CCD on a CMOS. The signal processing circuit includes, for example, an automatic gain control (AGC) circuit or an analog to digital converter (ADC), and converts an analog signal generated by the imaging element into a digital signal (image data).

In addition, the sensor group 168 may further include one or more sensors such as a position sensor such as a GNSS device and a motion sensor such as an acceleration sensor or an angular velocity sensor.

The battery 170 is an internal power source included in the vehicle 100. For example, each device driven by electric power in the vehicle 100 is driven by electric power supplied from the battery 170. Note that, as described above, the vehicle 100 is also able to be driven by electric power or the like supplied from a connected external power source.

For example, the vehicle 100 has the configuration shown in FIG. 4. Note that the hardware configuration of the vehicle 100 according to the present embodiment is not limited to the configuration shown in FIG. 4.

For example, in a case in which the vehicle 100 communicates with an external device or the like through a connected external communication device, the vehicle 100 may not include the communication device 166. In addition, the communication device 166 may be configured to be capable of communicating with one or more external devices or the like by a plurality of communication methods.

In addition, for example, in a case in which the driving operation is performed by a connected external operation device, the vehicle 100 may not include the operation device 162.

In addition, for example, in a case in which the captured image or the like is displayed on a display screen of a connected external display device, the vehicle 100 may not include the display device 164.

In addition, for example, in a case in which one or more external sensors are connected, the vehicle 100 may not include some or all of the sensors configuring the sensor group 168.

In addition, for example, in a case in which the vehicle 100 is driven by electric power supplied from a connected external battery, the vehicle 100 may include the battery 170.

In addition, the vehicle 100 is able to be configured not to include the recording medium 156.

In addition, for example, the vehicle 100 is able to have a configuration according to an application example of the vehicle 100, which will be described later.

In addition, for example, a part or all of the configuration shown in FIG. 4 (or the configuration according to the modified example) may be realized by one or more integrated circuits (ICs).

Referring to FIG. 3 again, an example of the configuration of the vehicle 100 will be described. The communication unit 102 is a communication means included in the vehicle 100, and performs wireless or wired communication with an external device such as the information processing device 200 through the network 300 (or directly). In addition, for example, the communication of the communication unit 102 is controlled by the control unit 110.

Here, an example of the communication unit 102 includes a communication antenna and an RF circuit, a LAN terminal and a transmission/reception circuit, or the like, but the configuration of the communication unit 102 is not limited to the above. For example, the communication unit 102 is able to have a configuration corresponding to an arbitrary standard capable of performing communication of a USB terminal, a transmission/reception circuit, and the like, or an arbitrary configuration capable of communicating with an external device through the network 300. In addition, the communication unit 102 may be configured to communicate with one or more external devices or the like by a plurality of communication methods.

The imaging unit 104 is an imaging means included in the vehicle 100, and plays a role of an image sensor that captures an image of the surroundings of the vehicle 100, such as the front surface, the side surface, and the rear surface of the vehicle 100. An example of the imaging unit 104 may include one or more imaging devices configuring the sensor group 168.

The display unit 106 is a display means included in the vehicle 100, and displays an image or the like related to a user interface (UI) on the display screen. An example of the display unit 106 may include the display device 164.

The operation unit 108 is an operation means included in the vehicle 100. An example of the operation unit 108 may include the operation device 162.

The control unit 110 includes, for example, an MPU or the like and plays a role of controlling the entire vehicle 100. In addition, the control unit 110 plays a role of a main agent of performing a process related to a control method according to the present embodiment, which will be described later.

The vehicle 100 has, for example, the configuration shown in FIG. 3.

Note that the configuration of the vehicle 100 according to the present embodiment is not limited to the configuration shown in FIG. 3.

For example, in a case in which communication is performed with an external device through an external communication device having a function and a configuration similar to those of the communication unit 102, the vehicle 100 may not include the communication unit 102.

In addition, for example, in a case in which an external imaging device having a function and a configuration similar to those of the imaging unit 104 is connected to the vehicle 100, the vehicle 100 may not include the imaging unit 104.

In addition, for example, in a case in which an external display device having a function and a configuration similar to those of the display unit 106 is connected to the vehicle 100, the vehicle 100 may not include the display unit 106.

In addition, for example, in a case in which an external operation device having a function and a configuration similar to those of the operation unit 108 is connected to the vehicle 100, the vehicle 100 may not include the operation unit 108.

### [2] Information processing device 200

The information processing device 200 performs a process related to the remote driving of the vehicle configuring a control system according to the present embodiment. An example of the process related to the remote driving according to the present embodiment is shown in an example of a process related to the control method according to the present embodiment, which will be described later.

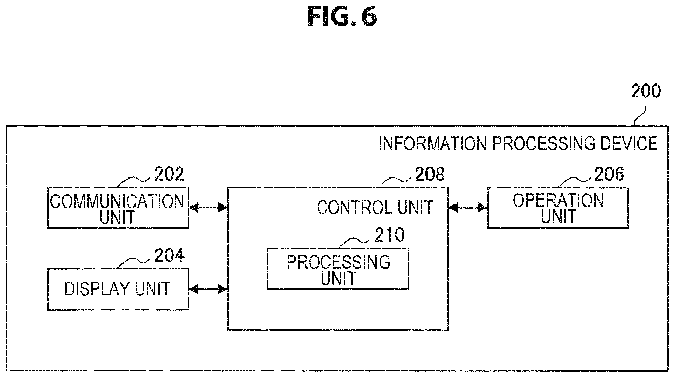

FIG. 6 is a block diagram illustrating an example of the configuration of the information processing device 200 according to the present embodiment. The information processing device 200 includes, for example, a communication unit 202, a display unit 204, an operation unit 206, and a control unit 208.

In addition, the information processing device 200 may include, for example, a ROM (not shown), a RAM (not shown), a storage unit (not shown), or the like. For example, the information processing device 200 connects between each of configuration elements by a bus as a transmission path of data.

The ROM (not shown) stores control data such as a program or an arithmetic parameter used by the control unit 208. The RAM (not shown) temporarily stores a program executed by the control unit 208, and the like.

The storage unit (not shown) is a storage means included in the information processing device 200 and, for example, the storage unit stores various data such as data related to the process that is related to the remote driving according to the present embodiment, or various applications. Here, an example of the storage unit (not shown) may include a magnetic recording medium such as a hard disk or a nonvolatile memory such as a flash memory. In addition, the storage unit (not shown) may be detachable from the information processing device 200.

### [Hardware configuration example of information processing device 200]

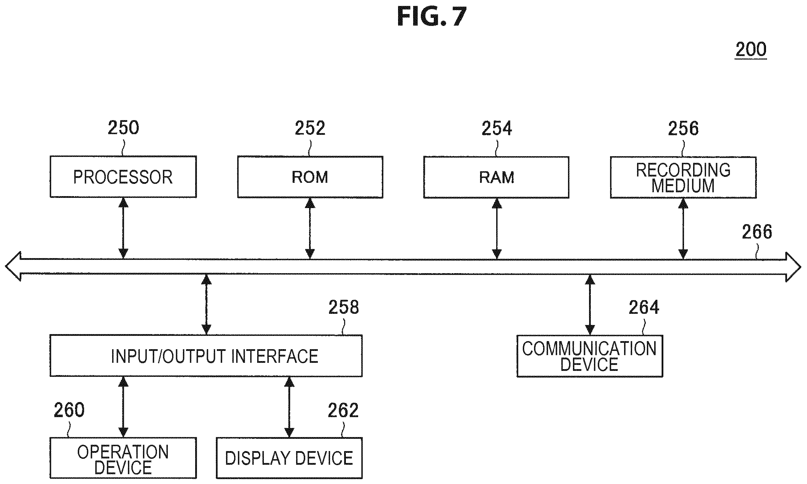

FIG. 7 is an explanatory diagram illustrating an example of a hardware configuration of the information processing device 200 according to the present embodiment. The information processing device 200 includes, for example, a processor 250, a ROM 252, a RAM 254, a recording medium 256, an input/output interface 258, an operation device 260, a display device 262, and a communication device 264. In addition, for example, the information processing device 200 connects between each of configuration elements by a bus 266 as a transmission path of data. In addition, the information processing device 200 is driven by, for example, electric power supplied from an internal power source such as a battery included in the information processing device 200, electric power supplied from a connected external power source, or the like.

For example, the processor 250 includes one or more processors, various processing circuits, or the like that include an arithmetic circuit such as an MPU, and functions as the control unit 208 that controls the entire information processing device 200. In addition, the processor 250 plays a role of, for example, a processing unit 210 that will be described later in the information processing device 200. Note that the processing unit 210 may include a dedicated (or general purpose) circuit (for example, a processor or the like separate from the processor 250) capable of realizing processes of each unit.

The ROM 252 stores a program used by the processor 250, control data such as an arithmetic parameter, or the like. The RAM 254 temporarily stores, for example, a program to be executed by the processor 250.

The recording medium 256 functions as a storage unit (not shown), and stores, for example, various data such as data related to the process that is related to the remote driving according to the present embodiment, various applications, or the like. Here, an example of the recording medium 256 may include a magnetic recording medium such as a hard disk or a nonvolatile memory such as a flash memory. In addition, the recording medium 256 may be detachable from the information processing device 200.

The input/output interface 258 connects, for example, the operation device 260 or the display device 262. The operation device 260 functions as the operation unit 206. In addition, the display device 262 functions as the display unit 204. Here, an example of the input/output interface 258 may include a USB terminal, a DVI terminal, a HDMI (registered trademark) terminal, or various processing circuits.

In addition, for example, the operation device 260 is provided on the information processing device 200 and is connected to the input/output interface 258 inside the information processing device 200. An example of the operation device 260 may include a button, a directional key, a rotary selector such as a jog dial, a combination thereof, or the like. In addition, the operation device 260 may be, for example, a controller as shown in FIGS. 5A and 5B.

In addition, for example, the display device 262 is provided on the information processing device 200 and is connected to the input/output interface 258 inside the information processing device 200. An example of the display device 262 includes a liquid crystal display or, organic EL display, or the like.

Note that, it goes without saying that the input/output interface 258 is able to be connected to an external device such as an operation input device (for example, a keyboard, a mouse, or the like) outside the information processing device 200 or an external display device. In addition, for example, the display device 262 may be a device capable of display and a user operation, such as a touch panel.

The communication device 264 is a communication means included in the information processing device 200, and functions as the communication unit 202 for performing wireless or wired communication with, for example, an external device such as the vehicle 100 through the network 300 (or directly). Here, an example of the communication device 264 includes a communication antenna and a RF circuit (wireless communication), an IEEE 802.15.1 port and a transmission/reception circuit (wireless communication), an IEEE 802.11 port and a transmission/reception circuit (wireless communication), a LAN terminal and a transmission/reception circuit (wired communication), or the like. In addition, the communication device 264 may be any configuration corresponding to the network 300.

For example, the information processing device 200 performs the process related to the remote driving by the configuration shown in FIG. 7. Note that the hardware configuration of the information processing device 200 according to the present embodiment is not limited to the configuration shown in FIG. 7.

For example, in a case in which the information processing device 200 communicates with an external device or the like through a connected external communication device, the information processing device 200 may not include the communication device 264. In addition, the communication device 264 may be configured to be capable of communicating with one or more external devices or the like by a plurality of communication methods.

In addition, for example, in a case in which the remote driving operation is performed by a connected external operation device, the information processing device 200 may not include the operation device 260.

In addition, for example, in a case in which an external display device is connected to the information processing device 200, the information processing device 200 may not include the display device 262.

In addition, for example, the information processing device 200 is able to be configured not to include the recording medium 256.

In addition, for example, the information processing device 200 is able to have a configuration according to an application example of the information processing device 200, which will be described later.

In addition, for example, a part or all of the configuration shown in FIG. 7 (or the configuration according to the modified example) may be realized by one or more ICs.

Referring to FIG. 6 again, an example of the configuration of the information processing device 200 will be described. The communication unit 202 is a communication means included in the information processing device 200, and performs wireless or wired communication with an external device such as the vehicle 100 through the network 300 (or directly). In addition, for example, the communication of the communication unit 202 is controlled by the control unit 208.

Here, an example of the communication unit 202 includes a communication antenna and an RF circuit, a LAN terminal and a transmission/reception circuit, or the like, but the configuration of the communication unit 202 is not limited to the above. For example, the communication unit 202 is able to have a configuration corresponding to an arbitrary standard capable of performing communication of a USB terminal, a transmission/reception circuit, and the like, or an arbitrary configuration capable of communicating with an external device through the network 300. In addition, the communication unit 202 may be configured to communicate with one or more external devices or the like by a plurality of communication methods.

The display unit 204 is a display means included in the information processing device 200, and displays an image or the like related to a UI that is related to the remote driving on the display screen. An example of the display unit 204 may include the display device 262.

The operation unit 206 is an operation means included in the information processing device 200. An example of the operation unit 206 may include the operation device 260.

The control unit 208 includes, for example, an MPU or the like and plays a role of controlling the entire information processing device 200. In addition, for example, the control unit 208 includes the processing unit 210 and the processing unit 210 plays a role of a main agent of performing a process related to the remote driving that will be described later.

The information processing device 200 has, for example, the configuration shown in FIG. 6.

Note that the configuration of the information processing device 200 according to the present embodiment is not limited to the configuration shown in FIG. 6.

For example, the information processing device 200 is able to include the processing unit 210 shown in FIG. 6 separately from the control unit 208 (for example, realized by different processing circuits).

In addition, for example, in a case in which communication is performed with an external device through an external communication device having a function and a configuration similar to those of the communication unit 202, the information processing device 200 may not include the communication unit 202.

In addition, for example, in a case in which an external display device having a function and a configuration similar to those of the display unit 204 is connected to the information processing device 200, the information processing device 200 may not include the display unit 204.

In addition, for example, in a case in which an external operation device having a function and a configuration similar to those of the operation unit 206 is connected, the information processing device 200 may not include the operation unit 206.

The control system 1000 according to the present embodiment has, for example, the configuration shown in FIG. 1. In the control system 1000 having the configuration shown in FIG. 1, the driving of the vehicle 100 by the driver of the vehicle 100 and the remote driving of the vehicle 100 by the user (the external driver) of the information processing device 200 are realized.

Note that the configuration of the control system according to the present embodiment is not limited to the example shown in FIG. 1.

For example, the control system according to the present embodiment may have a plurality of information processing devices capable of performing the process related to the remote driving of the vehicle configuring the control system according to the present embodiment. For example, each of the information processing devices configuring the control system according to the present embodiment has a function and a configuration similar to those of the information processing device 200 shown in FIG. 6. Hereinafter, one of the information processing devices capable of performing the process related to the remote driving of the vehicle configuring the control system according to the present embodiment will be referred to as "information processing device 200" in some cases.

In addition, the control system according to the present embodiment may have a plurality of vehicles capable of being driven by a driver and remote driving by an external driver. For example, each of the vehicles configuring the control system according to the present embodiment has a function and a configuration similar to those of the vehicle 100 shown in FIG. 3. Hereinafter, one of the vehicles configuring the control system according to the present embodiment will be referred to as "vehicle 100" in some cases.

In addition, the control system according to the present embodiment may further include a device that performs a process related to matching between each of the vehicles 100 configuring the control system and each of the information processing devices 200 configuring the control system. Here, for example, the matching according to the present embodiment refers to associating the vehicle 100 and the information processing device 200. Here, an example of the device that performs the process related to the matching may include an operator terminal 400 that will be described later.

### (Control method according to the present embodiment)

Next, the process related to the control method according to the present embodiment in the vehicle 100 will be described with the above-described control system 1000 as an example.

As described above, in the vehicle 100, for example, the control unit 110 performs the process related to the control method according to the present embodiment. More specifically, as the process related to the control method according to the present embodiment, the control unit 110 performs control related to switching between the driving by the driver and the remote driving outside the vehicle (hereinafter, referred to as "control related to switching). Hereinafter, an example of the control related to switching performed by the control unit 110 will be described.

### (1) First example of process related to control method according to the present embodiment: control of authority of driving operation

The control unit 110 controls the authority of the driving operation in each of the driving by the driver and the remote driving as the control related to switching.

The control unit 110 controls the authority of the driving operation in each of the driving by the driver and the remote driving, for example, on the basis of information indicating a restricted driving operation.

For example, the information indicating the restricted driving operation is stored in a recording medium such as a storage unit (not shown), and the control unit 110 acquires the information indicating the restricted driving operation by reading the information indicating the restricted driving operation from the recording medium. In addition, the control unit 110 is also able to acquire the information indicating the restricted driving operation by receiving the information indicating the restricted driving operation, that is transmitted from an external device such as the information processing device 200 (for example, data indicating a restricted driving operation that will be described later or data indicating a possible driving operation).

More specifically, the control unit 110 performs, for example, the following (1-1) process or the following (1-2) process.

### (1-1) First example of control of authority of driving operation

The control unit 110 controls the authority of the driving operation so that the remote driving enters an invalid state when the driving by the driver is in a valid state. In addition, the control unit 110 controls the authority of the driving operation so that the driving by the driver enters an invalid state when the remote driving is in a valid state.

Here, the valid state according to the present embodiment is a state in which the driving operation is not restricted. In addition, the invalid state according to the present embodiment is a state in which all driving operations are restricted.

That is, in a case in which the authority of the driving operation according to the first example is controlled, only one of the driving by the driver and the remote driving is valid.

### (1-2) Second example of control of authority of driving operation

The control unit 110 controls the authority of the driving operation so that the remote driving enters a restricted state when the driving by the driver is in the valid state. In addition, the control unit 110 controls the authority of the driving operation so that the driving by the driver enters the restricted state when the remote driving is in the valid state.

According to the claimed invention, the restricted state according to the present embodiment is a state in which some of the driving operations are restricted.

In the restricted state, for example, the control unit 110 restricts a driving operation to be restricted which is set in advance, such as, restricting a driving operation excluding brake of the vehicle 100, and restricting a driving operation excluding brake and horn of the vehicle 100. In addition, in the restricted state, for example, the control unit 110 may restrict a driving operation excluding a driving operation to be restricted that is set in advance, such as enabling only a brake operation of the vehicle 100 and enabling only a brake operation and a horn operation of the vehicle 100.

Note that the driving operation limited by the control unit 110 in the restricted state is not limited to the example described above.

For example, the control unit 110 may set the driving operation restricted when the remote driving is in the restricted state on the basis of the external driver who performs the remote driving.

For example, the control unit 110 specifies the restricted driving operation according to the external driver, on the basis of information indicating the external driver such as an ID, "a table (or a database) in which the information indicating the external driver is associated with the restricted driving operation (or a permitted driving operation) ". In addition, when the remote driving is in the restricted state, the control unit 110 restricts the specified restricted driving operation.

Here, for example, the information indicating the external driver is generated by specifying the external driver by an arbitrary authentication method capable of authenticating the external driver such as biometric authentication of an arbitrary method such as face authentication based on a captured image obtained by capturing the external driver or password authentication. A process of generating the information indicating the external driver is performed, for example, by the information processing device 200, the vehicle 100, or a device (for example, a server or the like) other than the information processing device 200 and the vehicle 100.

In addition, a content of the restricted driving operation that is recorded in the "table in which the information indicating the external driver is associated with the restricted driving operation" is updated by, for example, a skill level of the remote driving by the external driver. As one example, as the skill of the remote driving by the external driver is high, the content is updated so that the content of the restricted driving operation is reduced. The skill level of the remote driving by the external driver is able to be obtained by an arbitrary algorithm using, for example, a cumulative travel distance, a cumulative travel time, or the like in which the external driver performed the remote driving. A process of obtaining the skill level of the remote driving by the external driver and a process of updating the content of the restricted driving operation that is recorded in the "table in which the information indicating the external driver is associated with the restricted driving operation" are performed by, for example, the information processing device 200, the vehicle 100, or a device (for example, a server or the like) other than the information processing device 200 and the vehicle 100.

Note that a method of restricting the driving operation based on the external driver is not limited to the example described above.

For example, the control unit 110 is able to set the restricted driving operation on the basis of an estimation result of the external driver. Examples of the estimation result of the external driver may include an age, a sex, and the like of the external driver. A process of estimating the external driver is performed by, for example, the information processing device 200, the vehicle 100, or a device (for example, a server or the like) other than the information processing device 200 and the vehicle 100.

For example, the control unit 110 specifies the restricted driving operation according to the estimation result of the external driver with reference to "a table (or a database) in which data corresponding to the estimation result of the external driver is associated with the restricted driving operation. In addition, when the remote driving is in the restricted state, the control unit 110 restricts the specified restricted driving operation.

In addition, for example, the control unit 110 may set the driving operation restricted when the driving by the driver is in the restricted state, on the basis of the driver of the vehicle 100.

For example, the control unit 110 specifies the restricted driving operation according to the driver, on the basis of information indicating the driver such as an ID, "a table (or a database) in which the information indicating the driver is associated with the restricted driving operation (or a permitted driving operation) ". In addition, when the driving by the driver is in the restricted state, the control unit 110 restricts the specified restricted driving operation.

Here, for example, similarly to the information indicating the external driver, the information indicating the driver is generated by specifying the driver by an arbitrary authentication method capable of authenticating the driver of the vehicle 100. A process of generating the information indicating the driver is performed, for example, by the vehicle 100, the information processing device 200, or a device (for example, a server or the like) other than the vehicle 100 and the information processing device 200.

Note that a method of restricting the driving operation based on the driver is not limited to the example described above.

For example, the control unit 110 is able to set the restricted driving operation on the basis of an estimation result of the driver. Examples of the estimation result of the driver may include an age, a sex, and the like of the driver. A process of estimating the driver is performed, for example, by the vehicle 100, the information processing device 200, or a device (for example, a server or the like) other than the vehicle 100 and the information processing device 200.

For example, the control unit 110 specifies the restricted driving operation according to the estimation result of the driver with reference to "a table (or a database) in which data corresponding to the estimation result of the driver is associated with the restricted driving operation. In addition, when the driving by the driver is in the restricted state, the control unit 110 restricts the specified restricted driving operation.

In a case in which the authority of the driving operation according to the second example is controlled, the driving operation restricted when the driving by the driver is in the restricted state is able to be changed according to the driver of the vehicle 100. In addition, in a case in which the authority of the driving operation according to the second example is controlled, the driving operation restricted when the driving by the external driver is in the restricted state is able to be changed according to the external driver.

Note that, an example of the control of the authority of the driving operation is not limited to the control of the authority of the driving operation according to the first example shown in the above (1-1) and the control of the authority of the driving operation according to the second example shown in the above (1-2).

For example, the control unit 110 is able to control the authority of the driving operation in each of the driving by the driver and the remote driving on the basis of a detection result of the driver of the vehicle 100.

For example, in a case in which the driver of the vehicle 100 is not detected, the control unit 110 sets the remote operation to the valid state and controls the authority of the driving operation so that the driving by the driver enters the invalid state.

In addition, for example, in a case in which the driver of the vehicle 100 is detected, the control unit 110 controls the authority of the driving operation by the control of the authority of the driving operation according to the first example shown in the above (1-1) or the control of the authority of the driving operation according to the second example shown in the above (1-2).

### (2) Second example of process related to control method according to the present embodiment: control of switching timing

The control unit 110 controls the switching timing between the driving by the driver and the remote driving as a control related to the switching and switches between the driving by the driver and the remote driving.

More specifically, the control unit 110 switches between the driving by the driver and the remote driving by performing, for example, one or both of the following (2-1) process and the following (2-3) process.

In addition, when the control unit 110 switches from one of the driving by the driver and the remote driving to the other, the control unit 110 invalidates the driving operation performed before switching on a driving side of a switching destination. That is, the driving operation on the driving side of the switching destination becomes valid after the switching is completed.

The control unit 110 prevents the vehicle 100 from being driven by the driving operation performed before the switching by invalidating the driving operation performed before the switching on the driving side of the switching destination. Therefore, the control unit 110 is able to improve a safety in a case in which the driving by the driver and the remote driving switched by invalidating the driving operation performed before the switching on the driving side of the switching destination.

### (2-1) First example of control of switching timing

The control unit 110 switches between the driving by the driver and the remote driving by a switching operation of one or both of the driver and the external driver who performs the remote driving.

In a case of switching between the driving by the driver and the remote driving by the switching operation of one of the driver and the external driver, the control unit 110 switches between the driving by the driver and the remote driving, for example, as described below.

For example, the control unit 110 switches from the remote driving to the driving by the driver when the operation signal according to the switching operation transferred from the operation unit 108 of the vehicle 100 is detected. Here, examples of a process related to the switching when the operation signal according to the switching operation is detected may include the following examples. Note that it goes without saying that the examples of the process related to the switching in a case in which the operation signal according to the switching operation is detected are not limited to the examples shown below.
• When the driving by the driver is in the invalid state and the remote driving is in the valid state, the control unit 110 sets the driving by the driver to the valid state and sets the remote driving to the invalid state or the restricted state.
• When the driving by the driver is in the valid state and the remote driving is in the invalid state, the control unit 110 maintains the states.
• When the driving by the driver is in the valid state and the remote driving is in the restricted state, the control unit 110 " maintains the driving by the driver as the valid state and sets the remote driving to the invalid state" or "maintains the states".
· When the driving by the driver is in the restricted state and the remote driving is in the valid state, the control unit 110 sets the driving by the driver to the valid state and sets the remote driving to the invalid state or the restricted state.

### (2-2) Second example of control of switching timing

In a case in which a switching condition is satisfied, the control unit 110 switches between driving by the driver and the remote driving.

Here, an example of the switching condition according to the present embodiment may include a condition that is set in advance. Examples of the condition that is set advance may include the following examples. Note that it goes without saying that the examples of the condition that is set advance are not limited to the examples shown below.
- An example in which both of the driver of the vehicle 100 and the external driver do not perform the driving operation
- An example in which the vehicle 100 is stopped
- An example in which the vehicle 100 is in an automatic driving state
- An example in which it is determined that dangerous driving is performed by the remote driving
- An example in which two or more conditions that are able to be combined with each other among the above-described conditions are satisfied

In a case in which the example in which both of the driver of the vehicle 100 described above and the external driver do not perform the driving operation is set as the switching condition, for example, when the control unit 110 does not acquire the operation signal according to the driving operation transferred from the operation unit 108 of the vehicle 100 and does not acquire the operation signal according to the driving operation from the information processing device 200, the control unit 110 determines that the switching condition is satisfied.

In addition, in a case in which the example in which the vehicle 100 is stopped is set as the switching condition, for example, when the detection result of the motion sensor (for example, the motion sensor configuring the sensor group 168) included in the vehicle 100 indicates that the vehicle 100 is not moving, the control unit 110 determines that the switching condition is satisfied.

In addition, in a case in which the example in which the vehicle 100 is in the automatic driving state is set as the switching condition, for example, when an automatic driving program is executed in the vehicle 100, the control unit 110 determines that the switching condition is satisfied.

In addition, in a case in which the example in which it is determined that dangerous driving is performed by the remote driving is set as the switching condition, for example, when it is determined that the dangerous driving is performed on the basis of the movement of the vehicle 100 by the remote driving, the control unit 110 determines that the switching condition is satisfied.

Here, for example, the control unit 110 determines whether or not the dangerous driving is performed by the detection result of the motion sensor (for example, the motion sensor configuring the sensor group 168) included in the vehicle 100, the result of the image process of the captured image captured by the imaging device included in the vehicle 100, or a combination of the detection results. An example of a method of determining the dangerous driving on the basis of the result of the image process of the captured image may include a method of determining the dangerous driving by a detection position of a center line of a road, a method of determining the dangerous driving by a distance between the vehicle 100 and another object, a combination of the methods, or the like.

In a case in which it is determined that the dangerous driving is performed, the control unit 110 causes the vehicle 100 to be in a safe state, and then switches the driving from the remote driving to the driving by the driver. Examples of a method of causing the vehicle 100 to be in the safe state may include an example in which the control unit 110 executes the automatic driving program to stop the vehicle 100 at a safe position, and the like.

Note that the switching condition according to the present embodiment is not limited to the condition that is set in advance.

For example, the switching condition according to the present embodiment may be a condition that dynamically changes on the basis of a situation in which the vehicle 100 is placed. An example of the situation in which the vehicle 100 is placed may include a situation of a road on which the vehicle 100 is traveling.

An example of a condition that dynamically changes on the basis of the situation in which the vehicle 100 is placed will be described. For example, in a case in which the road on which the vehicle 100 is traveling is a straight line X [m] (X is a positive integer) in a traveling direction, the control unit 110 sets that both of the driver of the vehicle 100 and the external driver do not perform the driving operation as the switching condition. In addition, for example, in a case in which the road on which the vehicle 100 is traveling is not a straight line X [m] in the traveling direction, the control unit 110 sets that the vehicle 100 is stopped as the switching condition. Here, a value of X described above may be a fixed value that is set in advance, or may be a variable value that is able to be changed by an operation of the driver or the like of the vehicle 100.

### (3) Third example of process related to control method according to the present embodiment: control of request for remote driving

The control unit 110 performs control related to the request for the remote driving to an external device as the control related to the switching.

Here, the control related to the request according to the present embodiment includes, for example, communication control with an external device and display control on a display screen.

Hereinafter, an example of the control related to the request in the control unit 110 will be described while describing an example of a process related to a start of the remote driving of the vehicle 100 by a user (the external driver) of the information processing device 200 in the control system according to the present embodiment.

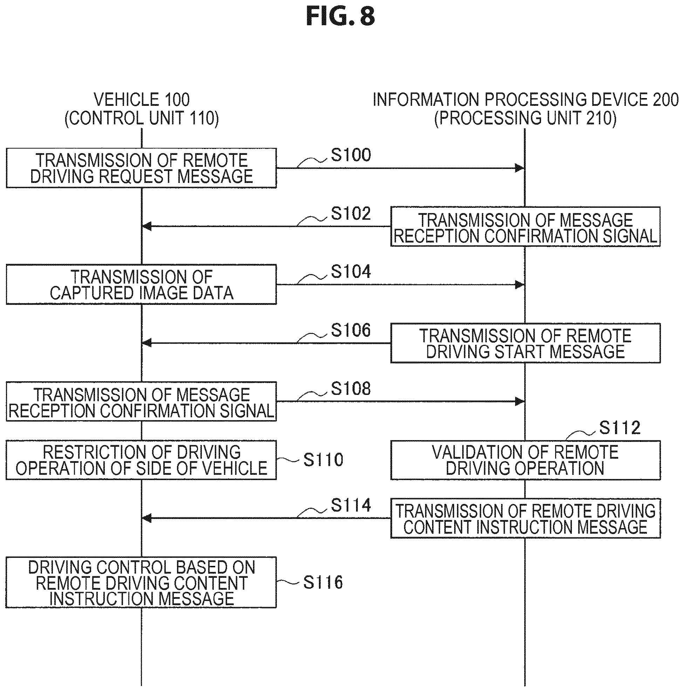

FIG. 8 is an explanatory diagram for explaining an example of the process related to the control method according to the present embodiment, and shows an example of a process performed in the vehicle 100 and the information processing device 200 when the remote operation of the vehicle 100 is started by the user (an external driver) of the information processing device 200.

Here, the process in the vehicle 100 in FIG. 8 corresponds to an example of the process related to the control of the request for the remote driving. As described above, for example, the process in the vehicle 100 in FIG. 8 is primarily performed by the control unit 110. Note that, in FIG. 8, for convenience of description, it is assumed that the process in the vehicle 100 is performed by the vehicle 100 and the description will be given.

In addition, the process in the information processing device 200 shown in FIG. 8 corresponds to an example of the process related to the remote driving. As described above, for example, the process in the information processing device 200 in FIG. 8 is primarily performed by the processing unit 210. Note that, in FIG. 8, for convenience of description, it is assumed that the process in the information processing device 200 is performed by the information processing device 200 and the description will be given.

For example, in a case in which a predetermined operation related to the request for the remote driving such as a pressure of a remote driving request button configuring the operation unit 108 is performed, the vehicle 100 transmits a remote driving request message (S100). In the vehicle 100, the control unit 110 controls the communication in the communication unit 102, and thus the process of step S100 is performed. The control unit 110 controls the communication in the communication unit 102 by, for example, transferring a control signal including a transmission command and transmission data to the communication unit 102.

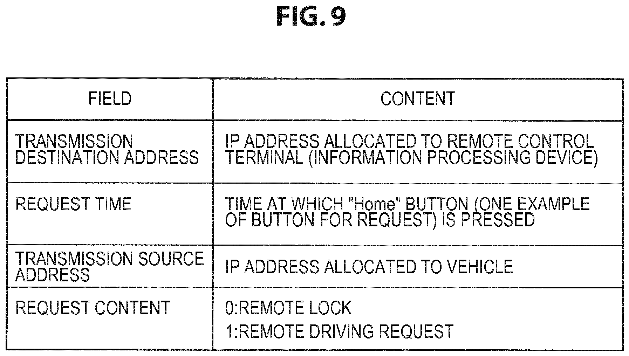

FIG. 9 is an explanatory diagram illustrating an example of the remote driving request message according to the present embodiment. The remote driving request message includes, for example, a transmission destination address, a request time, a transmission source address, and a request content.

The transmission destination address shown in FIG. 9 corresponds to, for example, an internet protocol (IP) address of a request destination device to which the remote driving is requested. In addition, the transmission source address shown in FIG. 9 corresponds to an IP address of the vehicle on which the remote driving is performed.

The request content shown in FIG. 9 is, for example, data specifying the request content for the remote driving. For example, in a case in which the request content shown in FIG. 9 indicates "remote operation lock", the remote driving enters the invalid state in the information processing device corresponding to the IP address indicated by the transmission destination address. In addition, for example, in a case in which the request content shown in FIG. 9 indicates "remote driving request", the remote driving enters the valid state in the information processing device corresponding to the IP address indicated by the transmission destination address. In addition, the request content may further include data indicating the driving operation restricted on the side of the information processing device (or data indicating a possible driving operation on the side of the information processing device). That is, the remote operation request message is able to function as data related to the control of the authority of the driving operation described above.

Note that it goes without saying that the example of the remote driving request message according to the present embodiment is not limited to the example shown in FIG. 9. Hereinafter, a case in which the request content of the remote driving request message shown in FIG. 9 indicates "remote driving request" will be described as an example.

Referring to FIG. 8 again, the example of the process performed in the vehicle 100 and the information processing device 200 when the remote driving of the vehicle 100 is started by the user (the external driver) of the information processing device 200 will be described. The information processing device 200 receiving the remote driving request message transmitted from the vehicle 100 in step S 100 transmits a message reception confirmation signal (S102). In the information processing device 200, the processing unit 210 controls the communication in the communication unit 202, and thus the process of step S102 is performed. The processing unit 210 controls the communication in the communication unit 202 by, for example, transferring a control signal including a transmission command and transmission data to the communication unit 202.

Here, an example of the message reception confirmation signal may include a signal indicating acknowledgemen (ACK).

The vehicle 100 receiving the message reception confirmation signal transmitted from the information processing device 200 in step S 102 transmits captured image data (S104). Note that the process of step S104 is repeatedly performed until the process related to the remote driving with the information processing device 200 is completed.

The information processing device 200 receiving the captured image data transmitted from the vehicle 100 in step S104 displays the captured image indicated by the captured image data on the display screen of the display unit 204.

In addition, for example, in a case in which a predetermined operation related to a start of the remote driving such as a pressure of a remote driving start button configuring the operation unit 206 is performed, the information processing device 200 transmits a remote driving start message (S106).

Here, an example of the remote driving start message may include data obtained by substituting a request content part of the remote driving request message shown in FIG. 9 to data indicating whether or not the remote driving is started. In addition, the remote driving start message may further include, for example, data indicating the driving operation restricted on the side of the vehicle (or data indicating a possible driving operation on the side of the vehicle). That is, the remote driving start message is able to function as the data related to the control of the authority of the driving operation described above.

The vehicle 100 receiving the remote driving start message transmitted from the information processing device 200 in step S106 transmits a message reception confirmation signal (S108).

In addition, the vehicle 100 receiving the remote driving start message restricts the driving operation on the side of the vehicle 100 (S110). For example, the vehicle 100 restricts the driving operation on the side of the vehicle 100 on the basis of the data indicating the driving operation restricted on the side of the vehicle (or the data indicating the possible driving operation on the side of the vehicle) included in the remote driving start message. In addition, for example, the vehicle 100 is also able to restrict the driving operation on the side of the vehicle 100 on the basis of information indicating the restricted driving operation, which is stored in a recording medium such as a storage unit (not shown).

In addition, the vehicle 100 receiving the remote driving start message may display "during remote driving" on the display screen of the display unit 106. For example, the vehicle 100 visually notifies a person riding in the vehicle 100 such as the driver of the vehicle 100 of "during remote driving" by displaying one or both of a letter and an image on the display screen.

In addition, the vehicle 100 receiving the remote driving start message may audibly notify the person riding in the vehicle 100 of "during remote driving" by outputting a sound indicating "during remote driving" from a sound output device such as a speaker.

Note that it goes without saying that a method of notifying the person riding in the vehicle 100 of "during remote driving" is not limited to the example shown above. In addition, the vehicle 100 may further notify the person riding in the vehicle 100 of the driving operation restricted in the vehicle 100 or the driving operation that is possible in the vehicle 100.

The information processing device 200 receiving the message reception confirmation signal transmitted from the vehicle 100 in step S108 validates the remote driving operation (S112). The information processing device 200 is in a state in which it is possible to remotely drive the vehicle 100 according to the operation of the operation unit 206, by step S112.

In addition, the information processing device 200 receiving the message reception confirmation signal may display "during remote driving" on the display screen of the display unit 204. For example, the information processing device 200 visually notifies the user (the external driver) of the information processing device 200 of "during remote driving" by displaying one or both of a letter and an image on the display screen.

In addition, the information processing device 200 receiving the message reception confirmation signal may audibly notify the user (the external driver) of the information processing device 200 of "during remote driving" by outputting a sound indicating "during remote driving" from a sound output device such as a speaker.

Note that it goes without saying that a method of notifying the user (the external driver) of the information processing device 200 of "during remote driving" is not limited to the example shown above. In addition, the information processing device 200 may further notify the user (the external driver) of the information processing device 200 of the driving operation restricted in the information processing device 200 or the driving operation that is possible in the information processing device 200.

For example, in a case in which an operation on the operation unit 206 is performed, the information processing device 200 transmits a remote driving content instruction message (S114).

Here, an example of the remote driving content instruction message may include data obtained by substituting a request content part of the remote driving request message shown in FIG. 9 to the remote driving operation content. The remote driving operation content includes, for example, a driving instruction of the vehicle according to the remote driving operation. In addition, the remote driving operation content may further include, for example, data indicating the driving operation restricted on the side of the vehicle (or data indicating a possible driving operation on the side of the vehicle). That is, the remote driving content instruction message is able to function as the data related to the control of the authority of the driving operation described above.

The vehicle 100 receiving the remote driving content instruction message transmitted from the information processing device 200 in step S114 performs driving control on the basis of the remote driving content instruction message and performs the driving (S116). The vehicle 100 is driven by driving the driving device 158 according to a driving command included in the remote driving content instruction message.

The remote driving of the vehicle 100 by the user (the external driver) of the information processing device 200 is realized by repeating the process of step S114 and the process of step S116 between the information processing device 200 and the vehicle 100.

For example, in the control system 1000, the remote driving of the vehicle 100 by the user (the external driver) of the information processing device 200 is realized by performing the process shown in FIG. 8.

Note that the process related to the control of the request for the remote driving in the control unit 110 of the vehicle 100 is not limited to the example shown in FIG. 8.

For example, in the control system according to the present embodiment, the request for the remote driving may be performed using a communication method such as a telephone or a mail (e-mail) as in the example shown below.

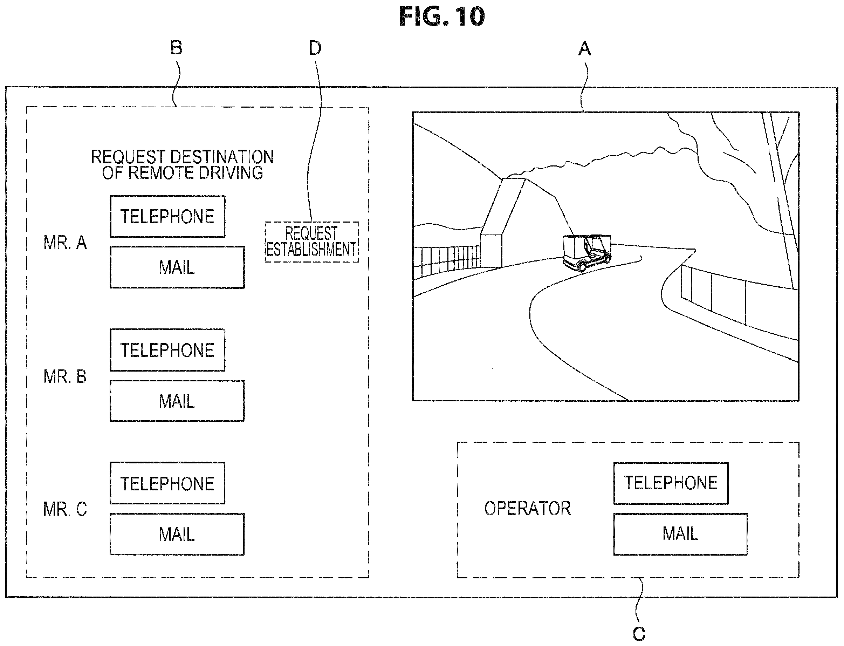

FIG. 10 is an explanatory diagram for explaining an example of the request for the remote driving in the control system according to the present embodiment, and shows an example of a UI screen displayed on the display screen of the vehicle 100 in a case in which the request for the remote driving is performed using the communication method such as the telephone or the mail.

As shown in FIG. 10, for example, the control unit 110 causes the display screen to display a UI screen on which an image (A of FIG. 10) based on the captured image captured by the imaging device included in the vehicle 100 and a request destination of the remote driving (B of FIG. 10 and C of FIG. 10) are displayed.

Here, the request destination of the remote driving represented as "Mr. A", "Mr. B", and "Mr. C" at B of FIG. 10 is, for example, a request destination of the remote driving registered in advance. The control unit 110 displays the request destination of the remote driving registered in advance as shown in B of FIG. 10 on the display screen by reading the information indicating the request destination of the remote driving from the recording medium such as the storage unit (not shown). The information indicating the request destination of the remote driving includes, for example, data indicating a name of the request destination and data for performing communication such as a telephone number or a mail address.

In addition, the request destination of the remote driving represented as "operator" in C of FIG. 10 is, for example, a service provider who provides a substitute service of the remote driving. The control unit 110 displays the request destination of the remote driving corresponding to the service provider on the display screen as shown in C of FIG. 10 by reading remote driving service information from the recording medium such as the storage unit (not shown). The remote driving service information includes, for example, data indicating a name of the request destination and data for performing communication such as a telephone number and a mail address.

For example, an example of the request for the remote driving using the communication method such as the telephone or the mail will be described by describing a case in which the UI screen shown in FIG. 10 is displayed on the display screen of the vehicle 100 as an example. Note that it goes without saying that the example of the UI related to the request for the remote driving using the communication method such as the telephone or the mail is not limited to the example shown in FIG. 10.

### (3-1) Example of request for remote driving to request destination of remote driving registered in advance

A case in which the request for the remote driving is performed to the request destination of the remote driving registered in advance by using the communication method such as the telephone or the mail will be described.

In a case in which it is desired to request the request destination of the remote driving registered in advance for the remote driving, for example, the driver of the vehicle 100 selects a person who it is desired to be requested from candidates of the request destination of the remote driving displayed on the display screen as shown in B of FIG. 10, and a decision operation is performed on a telephone button corresponding to the selected person or a mail button corresponding to the selected person. Examples of the decision operation include an operation using the operation device 162, an operation of pressing a button displayed on the display screen (in a case in which the display device 164 is a touch panel), and the like.

A case in which the driver of the vehicle 100 requests "Mr. A" for the remote driving by using the telephone will be described.

In a case in which the remote driving is requested to "Mr. A" by using the telephone, the driver of the vehicle 100 performs a decision operation on a telephone button corresponding to "Mr. A". In a case in which the above-described decision operation is detected, the control unit 110 starts calling by the telephone using a telephone number associated with the telephone button corresponding to "Mr. A".

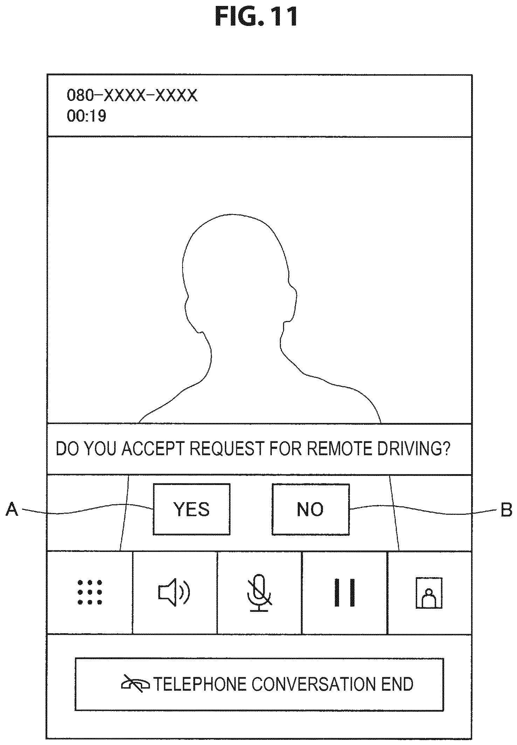

FIG. 11 is an explanatory diagram for explaining an example of the request for the remote driving in the control system according to the present embodiment and shows an example of a UI screen displayed on a display screen of a communication device corresponding to the request destination of the remote driving. An example of the communication device corresponding to the request destination of the remote driving shown in FIG. 11 may include a smartphone, a cellular phone, or the like corresponding to a telephone number associated with the request destination of the remote driving registered in advance.

In a case in which "Mr. A" performs a response by operating the communication device in response to a telephone call using the telephone number associated with the telephone button corresponding to "Mr. A", it is assumed that the vehicle 100 and the communication device are in a state in which telephone conversation is possible (hereinafter, referred to as "telephone conversation state").

After the telephone conversation state is established, the driver of the vehicle 100 verbally requests "Mr. A" for the remote driving. In a case in which the request for the remote driving is received, "Mr. A" performs a decision operation on a YES button (A shown in FIG. 11) displayed on the display screen. In addition, in a case in which the request for the remote driving is not received, "Mr. A" performs a decision operation on a NO button (B shown in FIG. 11) displayed on the display screen. An example of the decision operation may include an operation using the operation device included in the communication device, an operation of pressing a button displayed on the display screen, or the like.

In a case in which the decision operation is performed on the YES button (A shown in FIG. 11), a signal indicating that the request for the remote driving is received is transmitted from the communication device to the vehicle 100. The control unit 110 of the vehicle 100 receiving the above-described signal performs control related to the request for the remote driving on the information processing device 200 associated with the communication device. For example, the control unit 110 performs the processes of step S100 and after step S 100 shown in FIG. 8.

In addition, in a case in which the signal indicating that the request for the remote driving is received is received, for example, as shown in D of FIG. 10, the control unit 110 may display a message such as "request establishment" in a display area of the request destination of the remote driving corresponding to "Mr. A".

In a case in which the decision operation is performed on the NO button (B shown in FIG. 11), a signal indicating that the request for the remote driving is not received is transmitted from the communication device to the vehicle 100. The control unit 110 of the vehicle 100 receiving the above-described signal does not perform the control related to the request for the remote driving on the information processing device 200 associated with the communication device.

In addition, in a case in which the signal indicating that the request for the remote driving is not received is received, the control unit 110 may display a message such as "request non-establishment" in a display area of the request destination of the remote driving corresponding to "Mr. A".

Next, a case in which the driver of the vehicle 100 requests "Mr. A" for the remote driving by using the mail will be described.

In a case in which the remote driving is requested to "Mr. A" by using the mail, the driver of the vehicle 100 performs the decision operation on the mail button corresponding to "Mr. A". In a case in which the above-described decision operation is detected, the control unit 110 transmits a fixed message for the purpose of requesting the remote driving prepared for Mr. A by using a mail address associated with the mail button corresponding to "Mr. A". For example, the fixed message may be included in the information indicating the request destination of the remote driving or may be data different from the information indicating the request destination of the remote driving.

On the display screen of the communication device of "Mr. A" receiving the mail transmitted by the control unit 110, for example, a button for selecting whether or not to accept the request for the remote driving is displayed together with a content of the above-described fixed message. As the buttons for the selection described above, there are the YES button and the NO button as shown in FIG. 11.

For example, in a case in which the decision operation is performed on the YES button included in a mail, a mail including a message indicating that the request for the remote driving is received is transmitted from the communication device to the vehicle 100. The control unit 110 of the vehicle 100 receiving the above-described mail performs the control related to the request for the remote driving on the information processing device 200 associated with the mail address of "Mr. A". For example, the control unit 110 performs the processes of step S100 and after step S100 shown in FIG. 8.

In addition, in a case in which the mail indicating that the request for the remote driving is received is received, for example, as shown in D of FIG. 10, the control unit 110 may display a message such as "request establishment" in the display area of the request destination of the remote driving corresponding to "Mr. A".

In a case in which the decision operation is performed on the NO button included in the mail, a mail indicating that the request for the remote driving is not received is transmitted from the communication device to the vehicle 100. The control unit 110 of the vehicle 100 receiving the above-described mail does not perform the control related to the request for the remote driving on the information processing device 200 associated with the mail address of "Mr. A".

In addition, in a case in which the mail indicating that the request for the remote driving is not received is received, the control unit 110 may display a message such as "request non-establishment" in the display area of the request destination of the remote driving corresponding to "Mr. A".

### (3-2) Example of request for remote driving to service provider that provides substitute service for remote driving

A case in which the request for the remote driving is performed to the service provider that provides the substitute service for the remote driving by using the communication method such as the telephone or the mail will be described.

In a case in which it is desired to request the service provider that provides the substitute service of the remote driving for the remote driving, for example, the driver of the vehicle 100 performs a decision operation on a telephone button corresponding to the service provider or a mail button corresponding to the service provider, that is displayed on the display screen as "operator " shown in C of FIG. 10.

A case in which the driver of the vehicle 100 requests the remote driving to an "operator" of the service provider by using the telephone will be described.

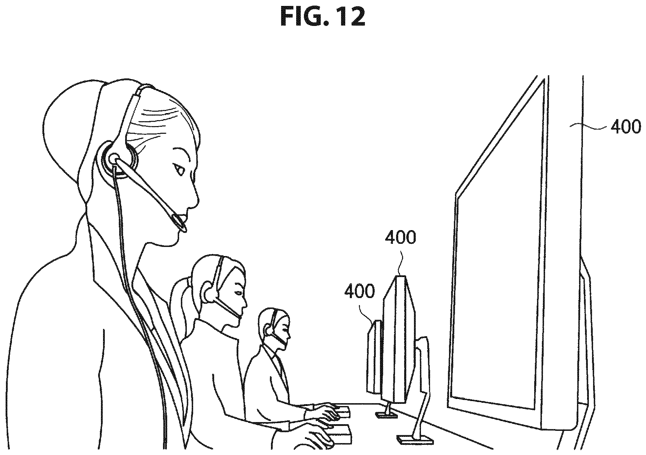

FIG. 12 is an explanatory diagram for explaining an example of the request for the remote driving in the control system according to the present embodiment, and the service provider that provides the substitute service of the remote driving shows an example of a call center that receives the request for the remote driving.

For example, as shown in FIG. 12, an operator terminal 400 is provided in the call center of the service provider that provides the substitute service of the remote driving. The operator terminal 400 is an example of a device managed by the service provider.

Each of the operator terminal 400, the vehicle 100 configuring the control system, and the information processing device 200 configuring the control system are connected to each other, for example, through the network 300 (or directly) by wired communication or wireless communication.

In addition, the operator terminal 400 is operated by an operator that receives the request for the remote driving. Here, as described above, the operator terminal 400 corresponds to an example of "a device that performs a process related to matching between each vehicle 100 configuring the control system and each information processing device 200 configuring the control system".

For example, the operator terminal 400 has a hardware configuration similar to that of the information processing device 200 shown in FIG. 7. For example, in the operator terminal 400, a process related to the substitute service of the remote driving is performed in the processor 250. Note that, the hardware configuration of the operator terminal 400 is not limited to the configuration shown in FIG. 7, and is able to be configured according to an application example of the operator terminal 400 that will be described later.

In a case in which the remote driving is requested to "operator" by using the telephone, the driver of the vehicle 100 performs a decision operation on a telephone button corresponding to "operator". In a case in which the above-described decision operation is detected, the control unit 110 starts calling by the telephone using a telephone number associated with the telephone button corresponding to "Mr. A".

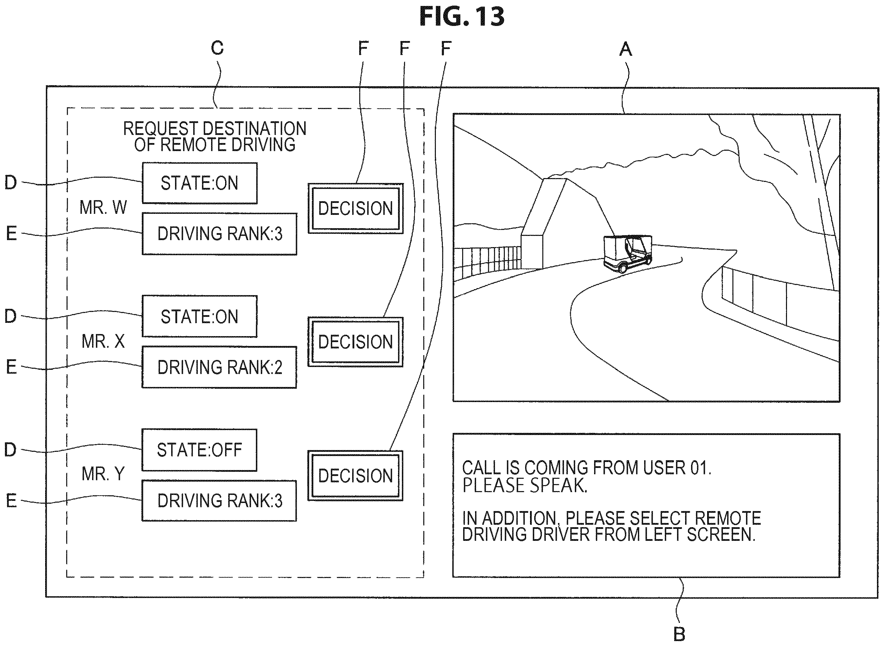

FIG. 13 is an explanatory diagram for explaining an example of the request for the remote driving in the control system according to the present embodiment and shows an example of a UI screen displayed on a display screen of the operator terminal 400.

For example, as shown in FIG. 13, on the display screen of the operator terminal 400, an image (A of FIG. 13) based on the captured image captured by the imaging device included in the vehicle 100, a request source of the remote driving (B of FIG. 13), and a request destination of the remote driving (C of FIG. 13) are displayed.

Request destinations of the remote driving represented as "Mr. W", "Mr. X", and "Mr. Y" in C of FIG. 10 are external drivers registered in advance (external driver held by the service provider).

In addition, for example, as shown in C of FIG. 10, on the display screen of the operator terminal 400, whether or not a state is a state in which it is possible to receive the request for remote driving now (D of FIG. 13) and a rank indicating a skill of the remote driving (E of FIG. 13) for each external driver are displayed. The rank (E of FIG. 13) indicating the skill of the remote driving is displayed, for example, to assist the selection of the external driver. Note that, on the display screen of the operator terminal 400, a content that is able to assist the selection of external driver, such as a degree of popularity of the external drivers for each external driver may be displayed.

Here, the operator terminal 400 determines whether or not the external driver is in a state in which the external driver is possible to receive the request for the remote driving now, for example, on the basis of the signal indicating whether or not it is possible to receive the request for the remote driving now transmitted from the communication device associated with the external driver.

Note that a method of determining whether or not the external driver is in the state in which the external driver is able to receive the request for the remote driving now is not limited to the example described above.

For example, the operator terminal 400 may determine whether or not the external driver is in the state in which the external driver is able to receive the request for the remote driving now as described below. The determination described below may be performed on a candidate of the external driver in a case in which the request for the remote driving from the vehicle 100 is received or may be periodically or non-periodically performed on a candidate for the external driver (in a case in which it is possible to perform the determination before the request for the remote driving is received).
· Whether or not a position of the communication device associated with the external driver is present within a set range: for example, in a case in which the position is present within a face range, the operator terminal 400 determines that the external driver is in the state in which the external driver is able to receive the request for the remote driving now.
• Whether or not a schedule of a registered external driver is empty or not: for example, in a case in which the schedule of the external driver is empty, the operator terminal 400 determines that the external driver is in the state in which the external driver is able to receive the request for the remote driving now.
• Whether or not authentication of the external driver is completed: for example, in a case in which authentication is normally completed by an arbitrary authentication method capable of authenticating the external driver such as biometric authentication of an arbitrary method such as face authentication, the operator terminal 400 determines that the external driver is in the state in which the external driver is able to receive the request for the remote driving now.
• Whether or not the external driver is in a state in which the external driver is able to perform the remote driving: for example, "in a case in which it is determined that a detected amount of alcohol of the external driver is equal to or less than a predetermined value on the basis of a result of alcohol check of the external driver by an alcohol checker or the like" and/or "in a case in which it is determined that the external driver is in a state in which the external driver is able to walk straight on the basis of movement data acquired from a device corresponding to the external driver", the operator terminal 400 determines that the external driver is in the state in which the external driver is able to receive the request for the remote driving now.
• In a case in which it is determined that a correct driving performed as a result of causing the external driver to virtually drive a virtual course, it is determined that the external driver is in the state in which the external driver is able to receive the request for the remote driving now.
• A combination of two or more of the examples described above

In addition, for example, the rank indicating the skill of the remote driving is given to the external driver by "a result of analysis of log data of the remote driving when the external driver performs the remote driving, a cumulative traveling distance the external driver performed the remote driving, a cumulative traveling time" and the like. A process of giving the rank to the external driver may be performed in the operator terminal 400 or another device related to the provision of the substitute service of the remote driving (for example, a server or the like managed by the service provider).

Note that the example of the UI screen displayed on the display screen of the operator terminal 400 is not limited to the example shown in FIG. 13. For example, the operator terminal 400 may display only the candidate for the external driver determined as the external driver of which the state is the state in which the external driver is able to receive the request for the remote driving now on the UI screen.

In a case in which an "operator" operates the operator terminal 400 and responds to the calling by the telephone using the telephone number associated with the telephone button corresponding to the "operator", the vehicle 100 and the operator terminal 400 are in a telephone conversation state.

After the telephone conversation state is established, the driver of the vehicle 100 verbally requests the "operator" for the remote driving. The "operator" selects the request destination of the remote driving desired by the driver of the vehicle 100 according to the message displayed in the area shown in B of FIG. 13. In addition, the "operator" who selected the request destination of the remote driving performs a decision operation on a decision button (F shown in FIG. 13) corresponding to the selected request destination of the remote driving. An example of the decision operation may include an operation using the operation device included in the operator terminal 400, an operation of pressing the decision button displayed on the display screen, or the like.

In a case in which the decision operation is performed on the decision button (F shown in FIG. 13) corresponding to the request destination of the remote driving, the operator terminal 400 performs a process of associating the vehicle 100 on which the request for the remote driving is performed and the information processing device 200 corresponding to the selected request destination of the remote driving with each other (process related to matching).

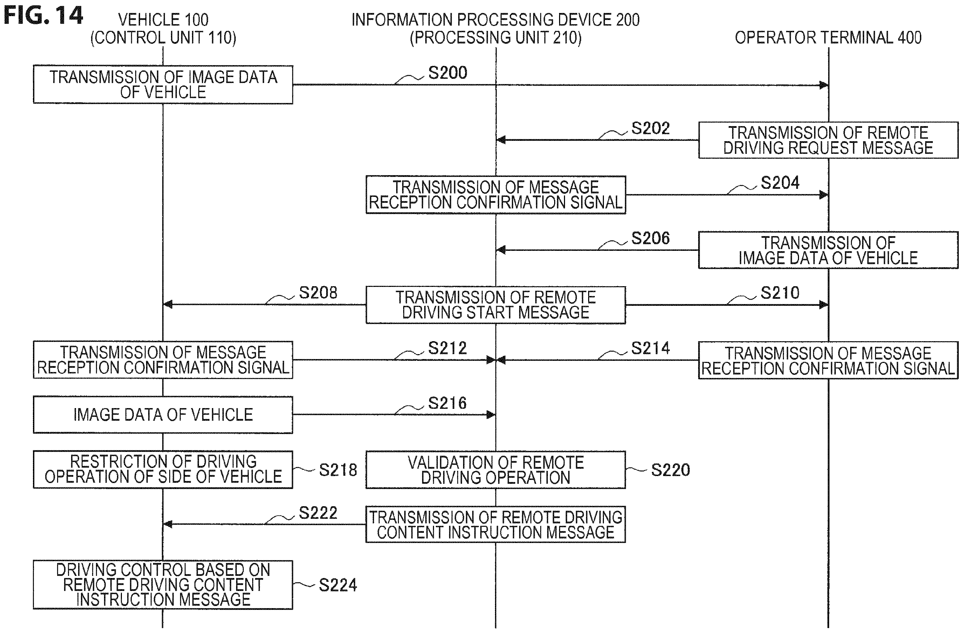

FIG. 14 is an explanatory diagram for explaining an example of a process related to the control method according to the present embodiment and shows an example of a process performed in the vehicle 100, the information processing device 200, and the operator terminal 400 when the user (the external driver) of the information processing device 200 starts the remote driving of the vehicle 100. FIG. 14 shows an example of a process in the control system in a case in which the "operator" using the operator terminal 400 performs the decision operation on the decision button (F shown in FIG. 13) corresponding to the request destination of the remote driving.

Here, the process in the vehicle 100 in FIG. 14 corresponds to an example of a process related to the control of the request for the remote driving. As described above, for example, the process in the vehicle 100 in FIG. 14 is primarily performed by the control unit 110. Note that, in FIG. 14, for convenience of description, it is assumed that the process in the vehicle 100 is performed by the vehicle 100 and the description will be given.

In addition, the process in the information processing device 200 shown in FIG. 14 corresponds to an example of the process related to the remote driving. As described above, for example, the process in the information processing device 200 in FIG. 14 is primarily performed by the processing unit 210. Note that, in FIG. 14, for convenience of description, it is assumed that the process in the information processing device 200 is performed by the information processing device 200 and the description will be given.

In addition, the process in the operator terminal 400 shown in FIG. 14 corresponds to an example of the process related to the matching. For example, the process in the information processing device 200 in FIG. 14 is primarily performed by a processor included in the operator terminal 400. Note that, in FIG. 14, for convenience of description, it is assumed that the process in the operator terminal 400 is performed by the operator terminal 400 and the description will be given.

The vehicle 100 transmits the captured image data to the operator terminal 400 (S200). Note that, for example, the process of step S200 is repeatedly performed until a process of step S212 that will be described later is performed.

For example, in a case in which the decision operation is performed on the decision button (F shown in FIG. 13) corresponding to the request destination of the remote driving, the operator terminal 400 transmits a remote driving request message to the information processing device 200 corresponding to the request destination of the remote driving (S202). In the operator terminal 400, the processor controls the communication in the communication device, and thus the process of step S202 is performed. The processor controls the communication in the communication device by, for example, transferring a control signal including a transmission command and transmission data to the communication device.

Here, an example of the remote driving request message transmitted from the operator terminal 400 to the information processing device 200 may include data of a format similar to that of the remote driving request message shown in FIG. 9.

The information processing device 200 receiving the remote driving request message transmitted from the operator terminal 400 in step S202 transmits a message reception confirmation signal to the operator terminal 400 (S204). In the information processing device 200, the processing unit 210 controls the communication in the communication unit 202, and thus the process of step S204 is performed. The processing unit 210 controls the communication in the communication unit 202 by, for example, transferring a control signal including a transmission command and transmission data to the communication unit 202. Here, an example of the message reception confirmation signal may include a signal indicating ACK.

The operator terminal 400 receiving the message reception confirmation signal transmitted from the information processing device 200 in step S204 transmits the captured image data acquired from the vehicle 100 in step S200 to the information processing device 200 (S206). Note that, for example, the process of step S206 is repeatedly performed until a process of step S214 that will be described later is performed.

The information processing device 200 receiving the captured image data transmitted from the operator terminal 400 in step S206 displays the captured image indicated by the captured image data on the display screen of the display unit 204.

In addition, for example, in a case in which a predetermined operation related to a start of the remote driving such as a pressure of a remote driving start button configuring the operation unit 206 is performed, the information processing device 200 transmits a remote driving start message to the vehicle 100 similar to step 106 of FIG. 8 (S208).

In addition, in a case in which a predetermined operation related to the start of the remote driving is performed, the information processing device 200 transmits a remote driving start message to the operator terminal 400 (S210). Note that the remote driving start message transmitted to the vehicle 100 in step S208 and the remote driving start message transmitted to the operator terminal 400 in step S210 may be different from each other. An example of the difference between the remote driving start message transmitted to the vehicle 100 and the remote driving start message transmitted to the operator terminal 400 may include an example in which the information processing device 200 transmits only data indicating whether or not the remote driving is started to the operator terminal 400 as the remote driving start message, and the like.

The vehicle 100 receiving the remote driving start message transmitted from the information processing device 200 in step S208 transmits a message reception confirmation signal to the information processing device 200 similar to step S108 of FIG. 8 (S212). The operator terminal 400 receiving the remote driving start message transmitted from the information processing device 200 in step S210 transmits a message reception confirmation signal to the information processing device 200 (S214).

The vehicle 100 transmitting the message reception confirmation signal in step S212 transmits the captured image data to the information processing device 200 (S216). Note that the process of step S216 is repeatedly performed until the process related to the remote driving with the information processing device 200 is completed.

Here, it is possible to specify the information processing device 200 in which the remote driving is started in the vehicle 100 by receiving the remote driving start message transmitted from the information processing device 200 in step S208. Therefore, for example, the vehicle 100 transmits the captured image data to the information processing device 200 using the remote driving start message received from the information processing device 200 as a trigger. In addition, as described above, the vehicle 100 transmitting the message reception confirmation signal in step S212 may end the process of step S200.

In addition, the vehicle 100 receiving the remote driving start message restricts the driving operation on the side of the vehicle 100 similarly to step S110 of FIG. 8 (S218).

In addition, for example, the vehicle 100 receiving the remote driving start message may notify the person riding in the vehicle 100 such as the driver of the vehicle 100 of "during remote driving" similarly to the process shown in FIG. 8, by one or both of a visual method and an auditory method. Furthermore, for example, the vehicle 100 may notify the person riding in the vehicle 100 of the driving operation restricted in the vehicle 100 or the driving operation that is possible in the vehicle 100 similarly to the process shown in FIG. 8.

The information processing device 200 receiving the message reception confirmation signal transmitted from the vehicle 100 in step S212 validates the remote driving operation similarly to step S112 of FIG. 8 (S220). The information processing device 200 is in a state in which it is possible to remotely drive the vehicle 100 according to the operation of the operation unit 206, by step S220.

In addition, for example, similarly to the process shown in FIG. 8, the information processing device 200 receiving the message reception confirmation signal may notify the user (the external driver) of the information processing device 200 of "during remote driving" by one or both of the visual method and the auditory method. Furthermore, for example, similarly to the process shown in FIG. 8, the information processing device 200 may notify the user (the external driver) of the information processing device 200 of the driving operation restricted in the information processing device 200 or the driving operation that is possible in the information processing device 200.

For example, in a case in which an operation on the operation unit 206 is performed, the information processing device 200 transmits a remote driving content instruction message similarly to step S114 of FIG. 8 (S222).

The vehicle 100 receiving the remote driving content instruction message transmitted from the information processing device 200 in step S222 performs driving control on the basis of the remote driving content instruction message and performs the driving similarly to step S116 of FIG. 8 (S224).

The remote driving of the vehicle 100 by the user (the external driver) of the information processing device 200 is realized by repeating the process of step S222 and the process of step S224 between the information processing device 200 and the vehicle 100.

For example, in the control system having the operator terminal 400, the remote driving of the vehicle 100 by the user (the external driver) of the information processing device 200 is realized by performing the process shown in FIG. 14.

Note that, in the control system having the operator terminal 400, the service provided by the service provider is not limited to the substitute service of the remote driving.

For example, the service provider is able to provide a service for monitoring an operation state of the vehicle 100. An example of the service for monitoring the operation state of the vehicle 100 may include "a service for monitoring dangerous driving by each of the driver of the vehicle 100 and the external driver who performs the remote driving (hereinafter, referred to as "dangerous driving monitoring service")".

In a case in which the dangerous driving monitoring service is provided, for example, the operator terminal 400 or a device managed by the service provider, such as a server managed by the service provider determines whether or not the dangerous driving is performed by the detection result of the motion sensor (for example, the motion sensor configuring the sensor group 168) included in the vehicle 100, or the like. In addition, in a case in which it is determined that the dangerous driving is performed, the device managed by the service provider performs a predetermined process such as issuing a warning to a person who is driving the vehicle 100 and causing the vehicle 100 to be in a safe state.

In addition, in a case in which the dangerous driving monitoring service is provided together with the substitute service of the remote driving, the device managed by the service provider may exclude an external driver determined as an external driver who has performed the dangerous driving from the candidate for the external driver. The device managed by the service provider excludes the external driver determined as the external driver who has performed the dangerous driving from the candidate for the external driver, for example, by registering the external driver determined as the external driver who has performed the dangerous driving in a black list.

As described above, it is possible to exclude those who have malicious intent, those who have low skill of the remote driving from the candidate for the external driver and it is possible to further improve the safety of the remote driving, by excluding the external driver determined as the external driver who has performed the dangerous driving from the candidate for the external driver.

### (4) Fourth example of process related to control method according to the present embodiment: control of end of remote driving

The control unit 110 performs control to end the remote operation that is being performed as the control related to the switching.

For example, the control unit 110 causes the remote driving to be in the invalid state and causes the driving by the driver to be in the valid state to end the remote driving that is being performed. That is, the control for ending the remote driving that is being performed includes, for example, a process of switching from the remote driving that is being performed to the driving by the driver.

Here, in a case in which the remote driving that is being performed is ended, the control unit 110 causes the vehicle 100 to be in a safe state and then ends the remote driving that is being performed. As an example, for example, after the control unit 110 stopping the vehicle 100 at a safe position by executing the automatic operation program, the control unit 110 causes the remote driving to be in the invalid state and causes the driving by the driver to be in the valid state. An example of the safe position may include a position that is set in advance such as a garage and a position determined to be safe by image processing on the captured image captured by the imaging device included in the vehicle 100, or the like.

In addition, in a case in which the remote driving that is being performed is ended, the control unit 110 may cause the vehicle 100 and the information processing device 200 to be in a state in which the telephone communication is possible by voice.

In addition, in a case in which the remote driving that is being performed is ended, the control unit 110 may notify the person riding in the vehicle 100 such as the driver of the vehicle 100 that the remote driving is to be ended by one or both of the visual method and the auditory method. For example, the control unit 110 visually notifies the person riding in the vehicle 100 that "remote driving is to be ended" by displaying one or both of a letter and an image on the display screen. In addition, for example, the control unit 110 audibly notifies the person riding in the vehicle 100 that "remote driving is to be ended" by outputting a sound indicating "remote driving is to be ended" from a sound output device. Note that it goes without saying that a method of notifying the person riding in the vehicle 100 that "remote driving is to be ended" is not limited to the example shown above.

More specifically, the control unit 110 ends the remote driving that is being performed, for example, by performing any one of the following (4-1) to (4-3) processes.

### (4-1) First example of control of end of remote driving

The control unit 110 ends the remote driving that is being performed by an end operation of one or both of the driver and the external driver who performs the remote driving.

In a case in which the remote driving that is being performed is ended by the end operation of one of the driver and the external driver, for example, the control unit 110 ends the remote driving that is being performed as follows.

For example, the control unit 110 ends the remote driving when an operation signal according to an end operation, which is transferred from the operation unit 108 of the vehicle 100, is detected.

### (4-2) Second example of control of end of remote driving

When an end termination condition is satisfied, the control unit 110 ends the remote driving that is being performed.

Here, an example of the end condition according to the present embodiment may include a condition set when the remote driving is started, or a condition set after the start of the remote driving. An example of the condition set when the remote driving is started, or a condition set after the start of the remote driving may include "a position of the vehicle 100 is included within a set range including a set target position". The end condition is set by setting the target position when the remote driving is started or by setting the target position after the start of the remote driving.

When "the position of the vehicle 100 is included within the set range including the set target position" is set as the end condition, for example, in a case in which the position of the vehicle 100 is within the set range, the control unit 110 determines that the end condition is satisfied.

Note that the end condition according to the present embodiment is not limited to the example described above.

For example, the end condition may be a condition based on a state of the remote driving. An example of the condition based on the state of the remote driving may include "it is determined that a dangerous driving is performed by the remote driving".

In addition, in a case in which "it is determined that a dangerous driving is performed by the remote driving" is set as the end condition, for example, when it is determined that a dangerous driving is performed based on the movement of the vehicle 100 by the remote driving, the control unit 110 determines that the end condition is satisfied.

### (5) Fifth example of process related to control method according to the present embodiment

The control unit 110 performs two or more of processes related to the first example shown in (1) described above to the process related to the fourth example shown in (4) described above as the control related to the switching.

In the vehicle 100, as the control related to the switching, for example, any one of the process related to the first example shown in (1) described above and the process related to the fifth example shown in (5) described above is performed. That is, in the vehicle 100, one or more of the following controls are realized as the control related to the switching.
- The control of the authority of the driving operation in each of the driving by the driver and the remote driving
- The control of timing for switching between the driving by the driver and the remote driving
- The control related to the request for the remote driving to the external device
- The control for ending the remote driving that is being performed

Therefore, it is possible to realize smoother switching between the driving by the driver and the remote driving by performing the process related to the control method according to the present embodiment in the vehicle 100.

Note that the process in the control unit 110 of the vehicle 100 is not limited to the process related to the control related to the switching.

For example, in a case in which the remote driving is performed, a movement speed of the vehicle 100 may be limited to be equal to or less than a speed at which a communication delay related to the remote driving with the information processing device 200 is able to be ignored. It is possible to further improve the safety in the remote driving by limiting the movement speed as described above.

In addition, in a case in which an automatic driving is being performed, the control unit 110 is also able to limit the movement speed.

### (Use case of control system according to the present embodiment)

For example, the control system according to the present embodiment is able to be applied to the following use case. Note that it goes without saying that the use case of the control system according to the present embodiment is not limited to the example shown below.
- A driving agent of the vehicle 100: For example, an example of the control system having the above-described operator terminal 400 corresponds to the driving agent of the vehicle 100. In addition, for example, in a case in which the control system having the above-described operator terminal 400 is used in a resort region or the like, as the vehicle 100 is remotely driven, a customer is able to fully enjoy a sense of privacy (since the driver becomes unnecessary).
- A remote support of the driver of the vehicle 100: For example, a parent of a child driving the vehicle 100 watches the child while driving at home and performs support as necessary by using the information processing device 200.

### (Application examples of each device configuring control system according to the present embodiment)

Although the vehicle has been described as a component of the control system according to the present embodiment, the present embodiment is not limited to such an embodiment. For example, the present embodiment is able to be applied to any moving body that is able to be driven by a driver such as "an electric car that moves with a motor such as an electric car", "an electric wheelchair that moves with a motor", "an automobile that moves with an internal combustion engine that burns gasoline or light oil to obtain power", and "a hover craft biped walking robot or the like that is able to move without using wheels".

In addition, although the information processing device has been described as a component of the control system according to the present embodiment, the present embodiment is not limited to such an embodiment. For example, the present embodiment is able to be applied to various apparatuses that are able to function as the information processing device according to the present embodiment, such as "a computer such as a personal computer (PC) or a server", "a communication device such as a smartphone", "an arbitrary wearable device such as an eyewear device, a clock device, and a bracelet device" used by being worn on a body of a user, "a tablet device", and "a game machine". In addition, for example, the present embodiment is able to be applied to a process IC that is able to be incorporated to the above-described apparatus.

In addition, although the operator terminal (an example of a device managed by the service provider) has been described as a component of the control system according to the present embodiment, the present embodiment is not limited to such an embodiment. For example, the present embodiment is able to be applied to various apparatuses that are able to function as the operator terminal according to the present embodiment, such as "a computer such as a personal computer (PC) or a server", "a communication device such as a smartphone", "an arbitrary wearable device such as an eyewear device, a clock device, and a bracelet device" used by being worn on a body of a user, "a tablet device", and "a game machine". In addition, for example, the present embodiment is able to be applied to a process IC that is able to be incorporated to the above-described apparatus.

### (Program according to the present embodiment)

[I] A program for causing a computer to function as the vehicle according to the present embodiment (for example, a program capable of executing the process related to the control method according to the present embodiment) is executed by a processor or the like in the computer, and thus the control related to the switching described above is realized. Therefore, it is possible to realize smoother switching between the driving by the driver and the remote driving by executing the program for causing the computer to function as the vehicle according to the present embodiment by the processor or the like in the computer.
   In addition, it is possible to achieve the effect exerted by the process related to the control method according to the present embodiment described above by executing the program for causing the computer to function as the vehicle according to the present embodiment by the processor or the like in the computer.
[II] A program for causing a computer to function as the information processing device according to the present embodiment (for example, a program functions as the processing unit 210) is executed by a processor or the like in the computer, and thus the control system on which the remote driving of the vehicle is performed is realized.
[III] A program for causing a computer to function as the operator terminal (an example of a device managed by the service provider) according to the present embodiment is executed by a processor or the like in the computer, and thus provision of a service using the remote driving such as the substitute service of the remote driving is realized.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above description, it is shown that the program (computer program) for causing the computer to function as the vehicle according to the present embodiment is provided. However, for example, the present embodiment is also able to further provide a recording medium in which the above-described program is stored. In addition, in the above description, it is shown that the program (computer program) for causing the computer to function as the information processing device according to the present embodiment is provided. However, for example, the present embodiment is also able to further provide a recording medium in which the above-described program is stored. In addition, in the above description, it is shown that the program (computer program) for causing the computer to function as the operator terminal (an example of a device managed by the service provider) according to the present embodiment is provided. However, for example, the present embodiment is also able to further provide a recording medium in which the above-described program is stored.

The above-described configuration shows an example of the present embodiment, and naturally belongs to the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 100: vehicle
- 102, 202: communication unit
- 104: imaging unit
- 106, 204: display unit
- 108, 206: operation unit
- 110, 208: control unit
- 200: information processing device
- 210: processing unit
- 300: network
- 400: operator terminal

## Claims

1. A vehicle that is able to be driven by a driver, the vehicle (100) comprising:
a control unit (110; 208) configured to perform control related to switching between driving by the driver and remote driving from an outside of the vehicle (100), wherein the control unit (110; 208) is configured to control authority of a driving operation in each of the driving by the driver and the remote driving and a timing of the switching between the driving by the driver and the remote driving as the control related to the switching, **characterized in that**
the control unit (110; 208) is configured to control the authority of the driving operation so that the remote driving enters a restricted state when the driving by the driver is in a valid state in which the driving operation is not restricted, and wherein the control unit (110; 208) is configured to control the authority of the driving operation so that the driving by the driver enters the restricted state when the remote driving is in the valid state, wherein in the restricted state some of the driving operations are restricted.

2. The vehicle according to any preceding claim, wherein the control unit (110; 208) is configured to control a timing of the switching between the driving by the driver and the remote driving as the control related to the switching by a switching operation of one or both of the driver and an external driver who performs the remote driving.

3. The vehicle according to claim 2, wherein the control unit (110; 208) is configured to switch between the driving by the driver and the remote driving in a case in which a switching condition is satisfied.

4. The vehicle according to claim 3, wherein the switching condition is a condition set in advance and/or a condition that dynamically changes on a basis of a situation in which the vehicle (100) is placed.

5. The vehicle according to any of claims 2 - 3, wherein, when the control unit (110; 208) switches from one driving of the driving by the driver and the remote driving to other driving, the control unit (110; 208) is configured to invalidate the driving operation performed before the switching on a driving side of a switching destination.

6. The vehicle according to any preceding claim, wherein the control unit (110; 208) is configured to perform control related to a request for the remote driving to an external device as the control related to the switching.

7. The vehicle according to claim 6, wherein the control related to the request includes communication control with the external device and display control on a display screen.

8. The vehicle according to any preceding claim, wherein the control unit (110; 208) is configured to perform control to end the remote driving that is being performed as the control related to the switching, in particular by an end operation of one or both of the driver and an external driver performing the remote driving.

9. The vehicle according to claim 8, wherein the control unit (110; 208) is configured to end the remote driving that is being performed in a case in which an end condition is satisfied.

10. The vehicle according to claim 9, wherein the end condition is a condition set when the remote driving is started or a condition set after the remote driving is started and/or a condition based on a state of the remote driving.

11. A control method that is executed by a vehicle (100) which is able to be driven by a driver, the control method comprising:
a step of performing control related to switching between driving by the driver and remote driving from an outside of the vehicle (100), and
a step of performing by a control unit (110; 208) control authority of a driving operation in each of the driving by the driver and the remote driving and a timing of the switching between the driving by the driver and the remote driving as the control related to the switching, wherein
the the step of performing control authority comprises controlling the authority of the driving operation so that the remote driving enters a restricted state when the driving by the driver is in a valid state in which the driving operation is not restricted, and controlling the authority of the driving operation so that the driving by the driver enters the restricted state when the remote driving is in the valid state, wherein in the restricted state some of the driving operations are restricted.

## Patentansprüche

1. Fahrzeug, das geeignet ist, von einem Fahrer gefahren zu werden, wobei das Fahrzeug (100) Folgendes umfasst:
eine Steuerungseinheit (110; 208), die dafür konfiguriert ist, eine Steuerung bezüglich des Umschaltens zwischen dem Fahren durch einen Fahrer und ferngesteuertem Fahren von außerhalb des Fahrzeugs (100) durchzuführen, wobei die Steuerungseinheit (110; 208) dafür konfiguriert ist, eine Befugnis eines Fahrvorgangs in jeweils dem Fahren durch einen Fahrer und dem ferngesteuerten Fahren und eine Zeitplanung des Umschaltens zwischen dem Fahren durch einen Fahrer und dem ferngesteuerten Fahren als die Steuerung bezüglich des Umschaltens zu steuern,
**dadurch gekennzeichnet, dass**
die Steuerungseinheit (110; 208) dafür konfiguriert ist, die Befugnis des Fahrvorgangs derart zu steuern, dass das ferngesteuerte Fahren in einen eingeschränkten Zustand tritt, wenn das Fahren durch den Fahrer in einem gültigen Zustand ist, in dem der Fahrvorgang nicht eingeschränkt ist, und wobei die Steuerungseinheit (110; 208) dafür konfiguriert ist, die Befugnis des Fahrvorgangs derart zu steuern, dass das Fahren durch den Fahrer in den eingeschränkten Zustand tritt, wenn das ferngesteuerte Fahren in dem gültigen Zustand ist, wobei in dem eingeschränkten Zustand einige Fahrvorgänge eingeschränkt sind.

2. Fahrzeug nach einem vorhergehenden Anspruch, wobei die Steuerungseinheit (110; 208) dafür konfiguriert ist, eine Zeitplanung des Umschaltens zwischen dem Fahren durch den Fahrer und dem ferngesteuerten Fahren als die Steuerung bezüglich des Umschaltens durch einen Umschaltvorgang des Fahrer und/oder eines externen Fahrers, der das ferngesteuerte Fahren durchführt, zu steuern.

3. Fahrzeug nach Anspruch 2, wobei die Steuerungseinheit (110; 208) dafür konfiguriert ist, zwischen dem Fahren durch den Fahrer und dem ferngesteuerten Fahren umzuschalten, wenn eine Umschaltbedingung erfüllt ist.

4. Fahrzeug nach Anspruch 3, wobei die Umschaltbedingung eine Bedingung ist, die im Vorhinein eingestellt wurde, und/oder eine Bedingung, die sich auf der Grundlage einer Situation, in die das Fahrzeug (100) versetzt wird, dynamisch verändert.

5. Fahrzeug nach einem der Ansprüche 2 bis 3, wobei die Steuerungseinheit (110; 208) dafür konfiguriert ist, den Fahrvorgang, der vor dem Umschalten auf einer Fahrseite eines Umschaltziels durchgeführt wurde, für ungültig zu erklären, wenn die Steuerungseinheit (110; 208) von einem Fahren des Fahrens durch den Fahrer und dem ferngesteuerten Fahren auf das andere Fahren umschaltet.

6. Fahrzeug nach einem vorhergehenden Anspruch, wobei die Steuerungseinheit (110; 208) dafür konfiguriert ist, eine Steuerung bezüglich einer Anfrage nach dem ferngesteuerten Fahren an ein externes Gerät als die Steuerung bezüglich des Umschaltens durchzuführen.

7. Fahrzeug nach Anspruch 6, wobei die Steuerung bezüglich der Anfrage eine Kommunikationssteuerung mit dem externen Gerät und eine Anzeigesteuerung auf einem Anzeigebildschirm beinhaltet.

8. Fahrzeug nach einem vorhergehenden Anspruch, wobei die Steuerungseinheit (110; 208) dafür konfiguriert ist, eine Steuerung zum Beenden des ferngesteuerten Fahrens durchzuführen, die als die Steuerung bezüglich des Umschaltens durchgeführt wird, insbesondere durch einen Beendigungsvorgang des Fahrer und/oder eines externen Fahrers, der das ferngesteuerte Fahren durchführt.

9. Fahrzeug nach Anspruch 8, wobei die Steuerungseinheit (110; 208) dafür konfiguriert ist, das ferngesteuerte Fahren, der durchgeführt wird, zu beenden, wenn eine Beendigungsbedingung erfüllt ist.

10. Fahrzeug nach Anspruch 9, wobei die Beendigungsbedingung eine Bedingung ist, die eingestellt wird, wenn das ferngesteuerte Fahren begonnen wird, oder eine Bedingung, die eingestellt wird, nachdem das ferngesteuerte Fahren begonnen wurde, und/oder eine Bedingung, die auf einem Zustand des ferngesteuerten Fahrens basiert.

11. Steuerverfahren, das durch ein Fahrzeug (100) ausgeführt wird, das geeignet ist, von einem Fahrer gefahren zu werden, wobei das Verfahren Folgendes umfasst:
einen Schritt des Durchführens einer Steuerung bezüglich des Umschaltens zwischen dem Fahren durch den Fahrer und einem ferngesteuerten Fahren von außerhalb des Fahrzeugs (100),
einen Schritt des Durchführens einer Steuerungsbefugnis eines Fahrvorgangs in jeweils dem Fahren durch einen Fahrer und dem ferngesteuerten Fahren und einer Zeitplanung des Umschaltens zwischen dem Fahren durch den Fahrer und dem ferngesteuerten Fahren als die Steuerung bezüglich des Umschaltens durch eine Steuerungseinheit (110; 208), wobei
wobei der Schritt des Durchführens einer Steuerungsbefugnis das Steuern der Befugnis des Fahrvorgangs derart umfasst, dass das ferngesteuerte Fahren in einen eingeschränkten Zustand tritt, wenn das Fahren durch den Fahrer in einem gültigen Zustand ist, in dem der Fahrvorgang nicht eingeschränkt ist, und das Steuern der Befugnis des Fahrvorgangs derart, dass das Fahren durch den Fahrer in den eingeschränkten Zustand tritt, wenn das ferngesteuerte Fahren in dem gültige Zustand ist, wobei in dem eingeschränkten Zustand einige der Fahrvorgänge eingeschränkt sind.

## Revendications

1. Véhicule apte à être conduit par un conducteur, le véhicule (100) comprenant :
une unité de commande (110 ; 208) configurée pour exécuter une commande liée à une commutation entre une conduite par le conducteur et une conduite à distance depuis l'extérieur du véhicule (100), l'unité de commande (110 ; 208) étant configurée pour gérer l'autorité d'une opération de conduite aussi bien dans la conduite par le conducteur que dans la conduite à distance et un moment de la commutation entre la conduite par le conducteur et la conduite à distance dans le cadre de la commande liée à la commutation,
**caractérisé en ce que**
l'unité de commande (110 ; 208) est configurée pour gérer l'autorité de l'opération de conduite de telle manière que la conduite à distance adopte un état limité lorsque la conduite par le conducteur occupe un état valide dans lequel l'opération de conduite n'est pas limitée, et l'unité de commande (110 ; 208) est configurée pour gérer l'autorité de l'opération de conduite de telle manière que la conduite par le conducteur adopte l'état limité lorsque la conduite à distance occupe l'état valide, certaines des opérations de conduite étant limitées dans l'état limité.

2. Véhicule selon l'une quelconque des revendications précédentes, dans lequel l'unité de commande (110 ; 208) est configurée pour gérer un moment de la commutation entre la conduite par le conducteur et la conduite à distance dans le cadre de la commande liée à la commutation par une opération de commutation du conducteur et/ou d'un conducteur externe qui exécute la conduite à distance.

3. Véhicule selon la revendication 2, dans lequel l'unité de commande (110 ; 208) est configurée pour commuter entre la conduite par le conducteur et la conduite à distance dans le cas où une condition de commutation est remplie.

4. Véhicule selon la revendication 3, dans lequel la condition de commutation est une condition définie au préalable et/ou une condition qui change dynamiquement en fonction d'une situation dans laquelle se trouve le véhicule (100).

5. Véhicule selon l'une quelconque des revendications 2 à 3, dans lequel, lorsque l'unité de commande (110 ; 208) commute d'une conduite parmi la conduite par le conducteur et la conduite à distance sur l'autre conduite, l'unité de commande (110 ; 208) est configurée pour invalider l'opération de conduite exécutée avant la commutation d'un côté conduite d'une destination de commutation.

6. Véhicule selon l'une quelconque des revendications précédentes, dans lequel l'unité de commande (110 ; 208) est configurée pour exécuter une commande liée à une demande de conduite à distance auprès d'un dispositif externe dans le cadre de la commande liée à la commutation.

7. Véhicule selon la revendication 6, dans lequel la commande liée à la demande comporte une commande de communication avec le dispositif externe et une commande d'affichage sur un écran d'affichage.

8. Véhicule selon l'une quelconque des revendications précédentes, dans lequel l'unité de commande (110 ; 208) est configurée pour exécuter une commande visant à mettre fin à la conduite à distance en cours d'exécution dans le cadre de la commande liée à la commutation, notamment par une opération de fin du conducteur et/ou d'un conducteur externe exécutant la conduite à distance.

9. Véhicule selon la revendication 8, dans lequel l'unité de commande (110 ; 208) est configurée pour mettre fin à la conduite à distance en cours d'exécution dans le cas où une condition de fin est remplie.

10. Véhicule selon la revendication 9, dans lequel la condition de fin est une condition définie lorsque la conduite à distance débute ou une condition définie après que la conduite à distance a débuté et/ou une condition qui est fonction d'un état de la conduite à distance.

11. Procédé de commande réalisé par un véhicule (100) apte à être conduit par un conducteur, le procédé de commande comprenant :
une étape d'exécution d'une commande liée à une commutation entre une conduite par le conducteur et une conduite à distance depuis l'extérieur du véhicule (100), et
une étape d'exécution, par une unité de commande (110 ; 208), d'une gestion d'autorité d'une opération de conduite aussi bien dans la conduite par le conducteur que dans la conduite à distance et un moment de la commutation entre la conduite par le conducteur et la conduite à distance dans le cadre de la commande liée à la commutation,
l'étape de réalisation d'une gestion d'autorité comprenant la gestion de l'autorité de l'opération de conduite de telle manière que la conduite à distance adopte un état limité lorsque la conduite par le conducteur occupe un état valide dans lequel l'opération de conduite n'est pas limitée, et la gestion de l'autorité de l'opération de conduite de telle manière que la conduite par le conducteur adopte l'état limité lorsque la conduite à distance occupe l'état valide, certaines des opérations de conduite étant limitées dans l'état limité.
